# EUROPEAN PATENT SPECIFICATION

(11) **EP 3 631 595 B1**
(45) Date of publication and mention of the grant of the patent: **18.08.2021**
(21) Application number: 17911764.3
(22) Date of filing: 31.05.2017
(51) Int. Cl.: G05D 1/02, G05D 1/10

(54) **METHOD AND SYSTEM FOR OPERATING A MOVABLE PLATFORM USING RAY-CASTING MAPPING**
VERFAHREN UND SYSTEM ZUM BETRIEB EINER BEWEGLICHEN PLATTFORM UNTER VERWENDUNG VON RAYCASTING-MAPPING
PROCÉDÉ ET SYSTÈME DE COMMANDE D'UNE PLATE-FORME MOBILE PAR MAPPAGE PAR TRACÉ DE RAYONS

(43) Date of publication of application: 08.04.2020
(73) Proprietor: SZ DJI Technology Co., Ltd., Shenzhen, Guangdong 518057 (CN)
(72) Inventor: YANG, Kang, Shenzhen, Guangdong 518057 (CN)
(74) Representative: Goddar, Heinz J.
(86) International application number: PCT/CN2017/086608
(87) International publication number: WO 2018/218508

(56) References cited:
- WO-A1-2014/033031
- CN-A- 104 950 883
- CN-A- 106 647 769
- US-A1- 2008 231 628
- US-A1- 2012 069 190
- HELEN OLEYNIKOVA ET AL: "Voxblox: Building 3D Signed Distance Fields for Planning", ARXIV.ORG, CORNELL UNIVERSITY LIBRARY, 201 OLIN LIBRARY CORNELL UNIVERSITY ITHACA, NY 14853, 11 November 2016 (2016-11-11), XP080731023,
- MANIKANDASRIRAM SRINIVASAN RAMANAGOPAL ET AL: "Motion Planning Strategies for Autonomously Mapping 3D Structures", ARXIV.ORG, CORNELL UNIVERSITY LIBRARY, 201 OLIN LIBRARY CORNELL UNIVERSITY ITHACA, NY 14853, 22 February 2016 (2016-02-22), XP080685086,
- EVEN JANI ET AL: "Probabilistic 3-D Mapping of Sound-Emitting Structures Based on Acoustic Ray Casting", IEEE TRANSACTIONS ON ROBOTICS, IEEE SERVICE CENTER, PISCATAWAY, NJ, US, vol. 33, no. 2, 1 April 2017 (2017-04-01), pages 333-345, XP011645017, ISSN: 1552-3098, DOI: 10.1109/TRO.2016.2630053 [retrieved on 2017-04-03]
- HU , ZHENGFENG: "Mobile Robot Navigation and Localization Based on Multi Sensor Information Fusion", Chinese excellent master's dissertations full text database information science and technology, 1 January 2004 (2004-01-01), pages 1-64, XP055661504,

## Description

### TECHNICAL FIELD

The disclosed embodiments relate generally to operating a movable platform and more particularly, but not exclusively, to planning a route for the movable platform using ray-casting mapping.

### BACKGROUND

Movable platforms such as unmanned aerial vehicles (UAVs) can be used for performing surveillance, reconnaissance, and exploration tasks for military and civilian applications. A movable platform usually is associated with a plurality of sensors configured to detect objects adjacent the movable platform. For example, the plurality of sensors may include one or more imaging sensors for capturing image data of the surrounding environment for avoiding obstacles and/or tracking targets in the surrounding environment. It is important to efficiently and accurately process and manage the sensor data obtained from the plurality of sensors to plan routes for the movable platform.

HELEN OLEYNIKOVA ET AL propose in their contribution "Voxbtox: Building 3D Signed Distance Fields for Planning", available at ARXIV.0RG, CORNELL UNIVERSITY LIBRARY, 201 OLIN LIBRARY CORNELL UNIVERSITY ITHACA, NY 14853 to reduce requirements by using large voxel sizes, and extend the standard TSDF representation to be faster and better model the environment. The authors further propose a method to build Euclidean Signed Distance Fields (ESDFs), which are a common representation for planning, incrementally out of our TSDF representation. ESDFs provide Euclidean distance to the nearest obstacle at any point in the map, and also provide collision gradient information for use with optimization-based planners. The authors validate the reconstruction accuracy and real-time performance of their combined system on both new and standard datasets from stereo and RGB-D imagery.

### SUMMARY

There is a need for systems and methods of processing sensor data obtained from a plurality of sensors associated with a movable platform. The sensor data can be efficiently processed to plan routes used for target tracking, obstacle avoidance, image/video capturing, and/or other suitable functionalities of the movable platform. Such systems and methods optionally complement or replace conventional methods for processing sensor data and for route planning for movable platforms. Additionally, the sensor data processing techniques as disclosed herein can be performed in real time as the movable platform moves along a path and captures sensor data.

The invention is defined by the independent claims.

### BRIEF DESCRIPTION OF THE DRAWINGS

Figure 1 illustrates a movable platform environment, in accordance with some embodiments.
Figure 2A illustrates a movable platform, in accordance with some embodiments.
Figure 2B illustrates an exemplary sensing system of a movable platform, in accordance with some embodiments.
Figure 3A illustrates an exemplary control unit of a target tracking system, in accordance with some embodiments.
Figure 3B illustrates an exemplary computing device for controlling a movable object, in accordance with some embodiments.
Figure 4 is a diagram illustrating a process of updating a grid map based on sensor data for a movable platform, in accordance with some embodiments.
Figure 5A illustrates an exemplary embodiment for processing sensor data of a movable platform by dividing a grid map into a plurality of divisions, in accordance with some embodiments.
Figure 5B illustrates an exemplary embodiment for processing sensor data of a movable platform by dividing a grid map into a plurality of subsets of grid cells, in accordance with some embodiments.
Figure 6 illustrates various exemplary embodiments for updating respective values of grid cells in a grid map for a movable platform based on ray casting status associated with the respective grid cells, in accordance with some embodiments.
Figure 7 illustrates exemplary embodiments of storing and reading values of respective grid cells in a grid map based on ray casting for a movable platform, in accordance with some embodiments.
Figure 8 illustrates an exemplary user interface for operating a movable platform based on a grid map, in accordance with some embodiments.
Figures 9A-9E are a flow diagram illustrating a method of planning a route for a movable platform, in accordance with some embodiments.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

The following description uses an unmanned aerial vehicle (UAV) (e.g., a copter) as an example of a movable platform. UAVs include, e.g., fixed-wing aircrafts and rotary-wing aircrafts such as helicopters, quadcopters, and aircraft having other numbers and/or configurations of rotors. In some embodiments, the movable platform also includes, but is not limited to, a handheld gimbal with a camera and image processing capabilities, a self-driving car (i.e., an autonomous car, a driverless car), a virtual reality (VR) headset, and an augmented reality (AR) headset. It will be apparent to those skilled in the art that other types of movable platforms may be substituted for UAVs as described below, such as a mobile phone, a tablet, or a remote control.

The present invention provides techniques related to processing and managing sensor data captured by a plurality of sensors associated with a movable platform, and operating the movable platform based on the sensor data, such as planning routes to avoid obstacles or track targets for the movable platform. In some embodiments, a grid map is generated and updated based on sensor data captured by the plurality of sensors associated with the movable platform in real-time as the movable platform moves along a path. For example, updating the grid map at a certain time point includes updating values of respective grid cells of the grid map based on sensor data captured at the corresponding time point, where the values of the respective grid cells represent status of ray casting through the respective grid cells at the corresponding time point. Furthermore, in order to efficiently process the sensor data while operating the movable platform in real-time, the grid map is divided into a plurality of subsets of grid cells. Based on operation parameters of the movable platform, one or more subsets of grid cells in the grid map, instead of the whole grid map, can be selected and updated. As such, the processing of the sensor data and the planning of the routes for the movable platform can be more efficient and accurate during a real-time operation of the movable platform.

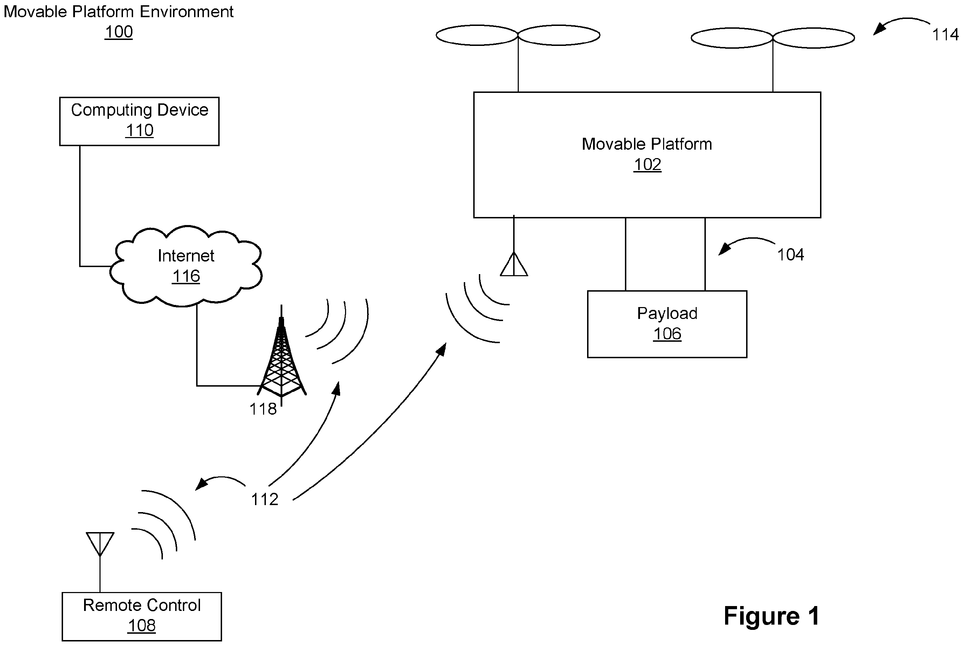

Figure 1 illustrates a movable platform environment 100, in accordance with some embodiments. The movable platform environment 100 includes a movable platform 102. In some embodiments, the movable platform 102 includes a carrier 104 and/or a payload 106.

In some embodiments, the carrier 104 is used to couple the payload 106 to the movable platform 102. In some embodiments, the carrier 104 includes an element (e.g., a gimbal and/or damping element) to isolate the payload 106 from movement of the movable platform 102 and/or the movement mechanism 114. In some embodiments, the carrier 104 includes an element for controlling movement of the payload 106 relative to the movable platform 102.

In some embodiments, the payload 106 is coupled (e.g., rigidly coupled) to the movable platform 102 (e.g., coupled via carrier 104) such that the payload 106 remains substantially stationary relative to movable platform 102. For example, the carrier 104 is coupled to the payload 106 such that the payload is not movable relative to the movable platform 102. In some embodiments, the payload 106 is mounted directly to the movable platform 102 without requiring the carrier 104. In some embodiments, the payload 106 is located partially or fully within the movable platform 102.

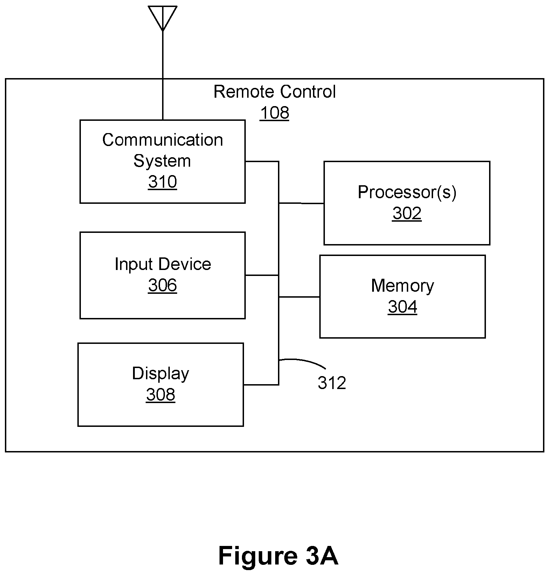

In some embodiments, a remote control 108 (e.g., as further discussed in Figure 3A) communicates with the movable platform 102, e.g., to provide control instructions to the movable platform 102 and/or to display information received from the movable platform 102 on a display (not shown) of the remote control 108. Although the remote control 108 is typically a portable (e.g., handheld) device, the remote control 108 need not be portable. In some embodiments, the remote control 108 is a dedicated control device (e.g., for the movable platform 102), a laptop computer, a desktop computer, a tablet computer, a gaming system, a wearable device (e.g., glasses, a glove, and/or a helmet), a microphone, a portable communication device (e.g., a mobile telephone) and/or a combination thereof.

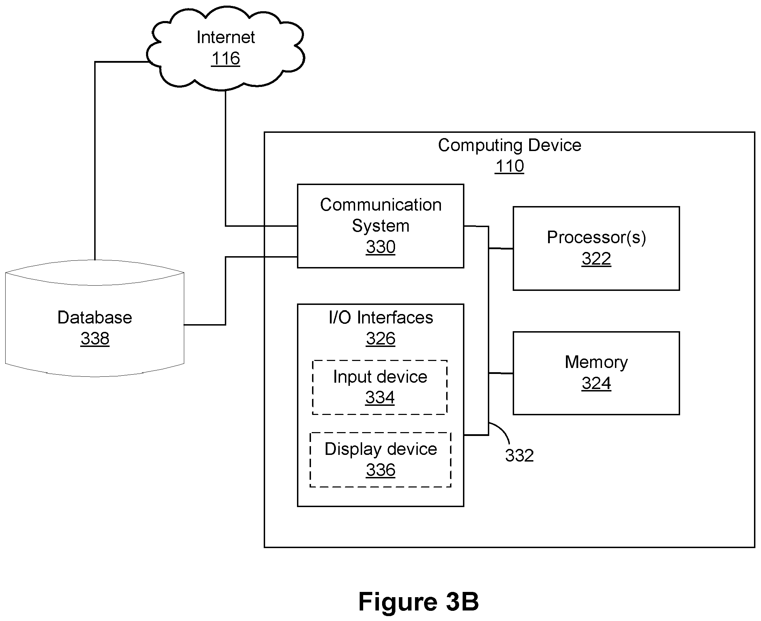

In some embodiments, the movable platform environment 100 includes a computing device 110 (e.g., as further discussed in Figure 3B). In some embodiments, the computing device 110 is, e.g., a server computer, a cloud server, a desktop computer, a laptop computer, a tablet, or another portable electronic device (e.g., a mobile telephone). In some embodiments, the computing device 110 is a base station that communicates (e.g., wirelessly) with the movable platform 102 and/or the remote control 108. In some embodiments, the computing device 110 provides data storage, data retrieval, and/or data processing operations, e.g., to reduce the processing power and/or data storage requirements of the movable platform 102 and/or the remote control 108. For example, the computing device 110 is communicatively connected to a database and/or the computing device 110 includes a database. In some embodiments, the computing device 110 is used in lieu of or in addition to the remote control 108 to perform any of the operations described with regard to the remote control 108.

In some embodiments, the movable platform 102 communicates with a remote control 108 and/or a computing device 110, e.g., via wireless communications 112. In some embodiments, the movable platform 102 receives information from the remote control 108 and/or the computing device 110. For example, information received by the movable platform 102 includes, e.g., control instructions for controlling movable platform 102. In some embodiments, the movable platform 102 transmits information to the remote control 108 and/or the computing device 110. For example, information transmitted by the movable platform 102 includes, e.g., images and/or video captured by the movable platform 102.

In some embodiments, communications between the computing device 110, the remote control 108 and/or the movable platform 102 are transmitted via a network (e.g., Internet 116) and/or a wireless signal transmitter (e.g., a long range wireless signal transmitter) such as a cellular tower 118. In some embodiments, a satellite (not shown) is a component of Internet 116 and/or is used in addition to or in lieu of the cellular tower 118.

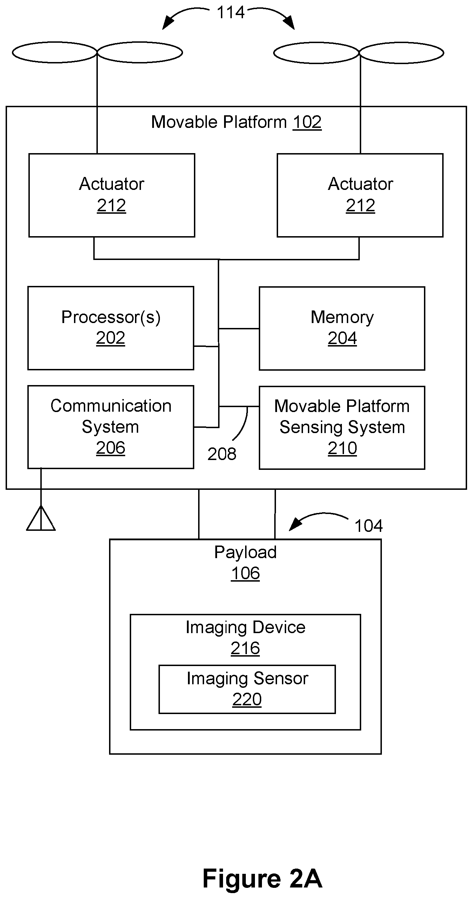

In some embodiments, information communicated between the computing device 110, the remote control 108 and/or the movable platform 102 include control instructions. In some embodiments, control instructions include, e.g., navigation instructions for controlling navigational parameters of the movable platform 102 such as position, orientation, orientation, and/or one or more movement characteristics of the movable platform 102, the carrier 104, and/or the payload 106. In some embodiments, control instructions include instructions directing movement of one or more of the movement mechanisms 114. For example, control instructions are used to control flight of a UAV. In some embodiments, control instructions include information for controlling operations (e.g., movement) of the carrier 104. In some embodiments, control instructions are used to adjust one or more operational parameters for the payload 106. In some embodiments, when control instructions are received by movable platform 102, the control instructions change parameters of and/or are stored by memory 204 (Figure 2A) of movable platform 102.

Figure 2A illustrates an exemplary movable platform 102, in accordance with some embodiments. The movable platform 102 typically includes one or more processor(s) 202, a memory 204, a communication system 206, a movable platform sensing system 210, and one or more communication buses 208 for interconnecting these components.

In some embodiments, the movable platform 102 is a UAV and includes components to enable flight and/or flight control. In some embodiments, the movable platform 102 includes communication system 206 with one or more network or other communications interfaces (e.g., via which flight control instructions are received), one or more movement mechanisms 114, and/or one or more movable platform actuators 212 (e.g., to cause movement of movement mechanisms 114 in response to received control instructions). Although the movable platform 102 is depicted as an aircraft, this depiction is not intended to be limiting, and any suitable type of movable platform can be used. Actuator 212 is, e.g., a motor, such as a hydraulic, pneumatic, electric, thermal, magnetic, and/or mechanical motor.

In some embodiments, the movable platform 102 includes movement mechanisms 114 (e.g., propulsion mechanisms). Although the plural term "movement mechanisms" is used herein for convenience of reference, "movement mechanisms 114" refers to a single movement mechanism (e.g., a single propeller) or multiple movement mechanisms (e.g., multiple rotors). The movement mechanisms 114 include one or more movement mechanism types such as rotors, propellers, blades, engines, motors, wheels, axles, magnets, nozzles, and so on. The movement mechanisms 114 are coupled to the movable platform 102 at, e.g., the top, bottom, front, back, and/or sides. In some embodiments, the movement mechanisms 114 of a single movable platform 102 include multiple movement mechanisms of the same type. In some embodiments, the movement mechanisms 114 of a single movable platform 102 include multiple movement mechanisms with different movement mechanism types. The movement mechanisms 114 are coupled to the movable platform 102 using any suitable means, such as support elements (e.g., drive shafts) and/or other actuating elements (e.g., the movable platform actuators 212). For example, a movable platform actuator 212 receives control signals from the processor(s) 202 (e.g., via the control bus 208) that activates the movable platform actuator 212 to cause movement of a movement mechanism 114. For example, the processor(s) 202 include an electronic speed controller that provides control signals to a movable platform actuator 212.

In some embodiments, the movement mechanisms 114 enable the movable platform 102 to take off vertically from a surface or land vertically on a surface without requiring any horizontal movement of the movable platform 102 (e.g., without traveling down a runway). In some embodiments, the movement mechanisms 114 are operable to permit the movable platform 102 to hover in the air at a specified position and/or orientation. In some embodiments, one or more of the movement mechanisms 114 are controllable independently of one or more of the other movement mechanisms 114. For example, when the movable platform 102 is a quadcopter, each rotor of the quadcopter is controllable independently of the other rotors of the quadcopter. In some embodiments, multiple movement mechanisms 114 are configured for simultaneous movement.

In some embodiments, the memory 204 stores one or more instructions, programs (e.g., sets of instructions), modules, controlling systems and/or data structures, collectively referred to as "elements" herein. One or more elements described with regard to the memory 204 are optionally stored by the remote control 108, the computing device 110, and/or another device. In some embodiments, imaging device 216 includes memory that stores one or more parameters described with regard to the memory 204

In some embodiments, the memory 204 stores a controlling system configuration that includes one or more system settings (e.g., as configured by a manufacturer, administrator, and/or user). For example, identifying information for the movable platform 102 is stored as a system setting of the system configuration. In some embodiments, the controlling system configuration includes a configuration for the imaging device 216. The configuration for the imaging device 216 stores parameters such as position, zoom level and/or focus parameters (e.g., amount of focus, selecting autofocus or manual focus, and/or adjusting an autofocus target in an image). Imaging property parameters stored by the imaging device configuration include, e.g., image resolution, image size (e.g., image width and/or height), aspect ratio, pixel count, quality, focus distance, depth of field, exposure time, shutter speed, and/or white balance. In some embodiments, parameters stored by the imaging device configuration are updated in response to control instructions (e.g., generated by processor(s) 202 and/or received by the movable platform 102 from remote control 108 and/or the computing device 110). In some embodiments, parameters stored by the imaging device configuration are updated in response to information received from the movable platform sensing system 210 and/or the imaging device 216.

In some embodiments, a controlling system performs imaging device adjustment. The imaging device adjustment module stores, e.g., instructions for adjusting a distance between an image sensor and an optical device of an imaging device 216, e.g., instructions for controlling an imaging device actuator. In some embodiments, the controlling system performs an autofocus operation. In some embodiments, the controlling system performs image distance determination, e.g., to determine an object distance and/or an image distance in accordance with the operations described herein. In some embodiments, one or more instructions for performing the above mentioned operations are stored in the memory 204.

The above identified controlling system, modules, and/or programs (e.g., sets of instructions) need not be implemented as separate software programs, procedures or modules, and thus various subsets of these modules may be combined or otherwise re-arranged in various embodiments, and stored in the memory 204. In some embodiments, the controlling system includes a subset of the modules and data structures identified above. Furthermore, the memory 204 may store additional modules and data structures not described above. In some embodiments, the programs, modules, and data structures stored in the memory 204, or a non-transitory computer readable storage medium of memory 204, provide instructions for implementing respective operations in the methods described below. In some embodiments, some or all of these modules may be implemented with specialized hardware circuits that subsume part or all of the module functionality. One or more of the above identified elements may be executed by one or more processors 202 of the movable platform 102. In some embodiments, one or more of the above identified modules are stored on one or more storage devices of a device remote from the movable platform (such as memory of the remote control 108, the computing device 110, and/or the imaging device 216) and/or executed by one or more processors of a device remote from the movable platform 102 (such as processor(s) of the remote control 108, the computing device 110, and/or the imaging device 216).

The communication system 206 enables communication with the remote control 108 and/or the computing device 110, e.g., via wireless signals 112. The communication system 206 includes, e.g., transmitters, receivers, and/or transceivers for wireless communication. In some embodiments, the communication is one-way communication, such that data is only received by the movable platform 102 from the remote control 108 and/or the computing device 110, or vice-versa. In some embodiments, communication is two-way communication, such that data is transmitted in both directions between the movable platform 102 and the remote control 108 and/or the computing device 110. In some embodiments, the movable platform 102, the remote control 108, and/or the computing device 110 are connected to the Internet 116 or other telecommunications network, e.g., such that data generated by the movable platform 102, the remote control 108, and/or the computing device 110 is transmitted to a server for data storage and/or data retrieval (e.g., for display by a website).

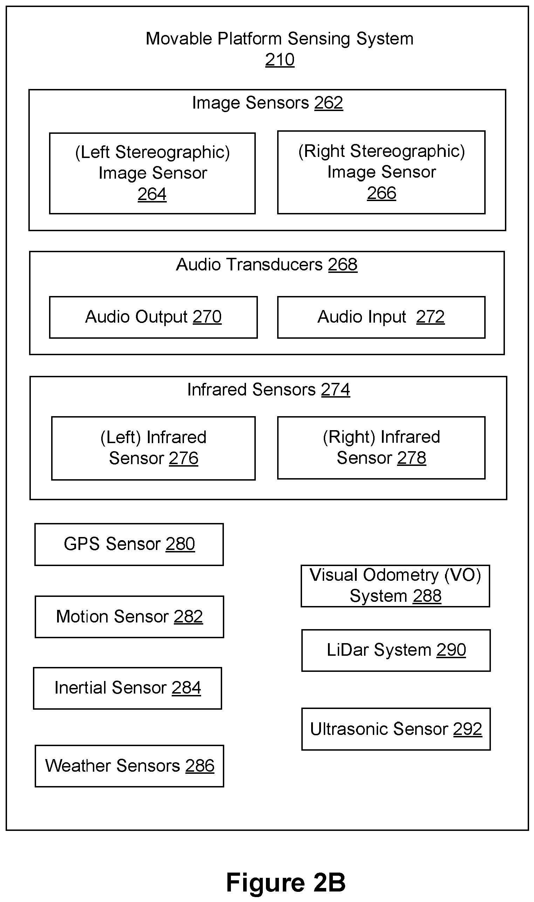

In some embodiments, the sensing system 210 of the movable platform 102 includes one or more sensors, as described further with reference to Figure 2B. In some embodiments, movable platform 102 and/or control unit 104 use sensing data generated by sensors of sensing system 210 to determine information such as a position of movable platform 102, an orientation of movable platform 102, movement characteristics of movable platform 102 (e.g., angular velocity, angular acceleration, translational velocity, translational acceleration and/or direction of motion along one or more axes), proximity of movable platform 102 to potential obstacles, weather conditions, locations of geographical features and/or locations of manmade structures.

Figure 2B illustrates an exemplary sensing system 210 of a movable platform 102, in accordance with some embodiments. In some embodiments, one or more sensors of the movable platform sensing system 210 are mounted to the exterior, located within, or otherwise coupled to the movable platform 102. In some embodiments, one or more sensors of the movable platform sensing system 210 are components of and/or coupled to the carrier 104, the payload 106, and/or the imaging device 216. Where sensing operations are described herein as being performed by the movable platform sensing system 210, it will be recognized that such operations are optionally performed by one or more sensors of the carrier 104, the payload 106, and/or the imaging device 216 in addition to and/or in lieu of one or more sensors of the movable platform sensing system 210. In some embodiments, movable platform sensing system 210 generates static sensing data (e.g., a single image captured in response to a received instruction) and/or dynamic sensing data (e.g., a series of images captured at a periodic rate, such as a video).

In some embodiments, movable platform sensing system 210 includes one or more image sensors 262. In some embodiments, the one or more image sensors 262 include a plurality of stereoscopic cameras, such as a pair of stereoscopic cameras including a left stereographic image sensor 264 and a right stereographic image sensor 266. The image sensors 262 capture images, image streams (e.g., videos), stereographic images (e.g., stereoscopic images), and/or stereographic image streams (e.g., stereographic videos). In some embodiments, the image sensors 262 include multiple pairs of stereoscopic cameras located at different parts (e.g., sides, areas, etc.) of the movable platform 102, such as one or more parts of the top part, bottom part, front part, back part, left part, and right part of the movable platform 102. For example, movable platform sensing system 210 includes a pair of stereoscopic cameras located at the front of the movable platform 102, another pair of stereoscopic cameras at the back of the movable platform 102, and yet another pair of stereoscopic cameras at the bottom of the movable platform 102. Image sensors 262 detect light, such as visible light, infrared light, and/or ultraviolet light. In some embodiments, movable platform sensing system 210 includes one or more optical devices (e.g., lenses) to focus or otherwise alter the light onto one or more image sensors 262. In some embodiments, image sensors 262 include, e.g., semiconductor charge-coupled devices (CCD), active pixel sensors using complementary metal-oxide-semiconductor (CMOS) or N-type metal-oxide-semiconductor (NMOS, Live MOS) technologies, or any other types of sensors.

In some embodiments, movable platform sensing system 210 includes one or more audio transducers 268. For example, an audio detection system includes audio output transducer 270 (e.g., a speaker), and audio input transducer 272 (e.g. a microphone, such as a parabolic microphone). In some embodiments, a microphone and a speaker are used as components of a sonar system. In some embodiments, a sonar system is used to detect location information of an object (e.g., an obstacle and/or a target) in the environment.

In some embodiments, movable platform sensing system 210 includes one or more infrared sensors 274. In some embodiments, a distance measurement system includes a pair of infrared sensors, e.g., infrared sensor 276 (such as a left infrared sensor) and infrared sensor 278 (such as a right infrared sensor) or another sensor or sensor pair. The distance measurement system can be used to measure a distance to an object in the environment (e.g., a target and/or an obstacle).

In some embodiments, a system to produce ray-casting map includes one or more sensors or sensor pairs of movable platform sensing system 210 (such as left stereographic image sensor 264 and right stereographic image sensor 266; audio output transducer 270 and audio input transducer 272; and/or left infrared sensor 276 and right infrared sensor 278). In some embodiments, a pair of sensors in a stereo data system (e.g., a stereographic imaging system) simultaneously captures data from different positions. In some embodiments, a depth map is generated by a stereo data system using the simultaneously captured data. In some embodiments, a depth map is used for positioning and/or detection operations, such as detecting an obstacle, detecting current location information of an obstacle, detecting a target, and/or detecting current location information for a target. In some embodiments, movable platform sensing system 210 includes one or more depth sensors, such as time-of-flight (TOF) cameras. For example, movable platform sensing system 210 includes TOF cameras located at left and right sides of the movable platform 102. One or more TOF cameras may also locate other parts of the movable platform 102. A TOF camera calculates a distance of each point/pixel in an image frame based on the speed of light. For example, the time-of-flight of a light signal between the imaging system and the subject for a pixel in the image frame is measured to determine the distance (e.g., depth) of the corresponding pixel.

In some embodiments, movable platform sensing system 210 further includes, but is not limited to, one or more global positioning system (GPS) sensors 280, motion sensors (e.g., accelerometers) 282, rotation sensors (e.g., gyroscopes), inertial sensors 284, proximity sensors (e.g., infrared sensors) and/or weather sensors 286 (e.g., pressure sensor, temperature sensor, moisture sensor, and/or wind sensor), visual odometry (VO) system 288, Lidar system 290, and ultrasonic sensor 292. In some embodiments, the movable platform sensing system 210 includes an inertial measurement unit (IMU) that may include the motion sensors 282, the rotation sensors, and optionally magnetometers.

In some embodiments, sensing data generated by one or more sensors of movable platform sensing system 210 and/or information determined using sensing data from one or more sensors of movable platform sensing system 210 are transmitted to remote control 108 (e.g., via communication system 206). In some embodiments, data generated by the one or more sensors of movable platform sensing system 210 and/or information determined using sensing data from one or more sensors of movable platform sensing system 122 can be stored by memory 204.

Figure 3A illustrates an exemplary remote control 108 for movable platform 102, in accordance with some embodiments. In some embodiments, remote control 108 communicates with movable platform 102 via communication system 310, e.g., to provide control instructions to movable platform 102. Remote control 108 may or may not be portable (e.g., handheld). In some embodiments, remote control 108 is a dedicated control device (e.g., dedicated to operation of movable platform 102), a laptop computer, a desktop computer, a tablet computer, a gaming system, a wearable device (e.g., glasses, gloves, and/or helmet), a microphone, and/or a combination thereof.

In some embodiments, remote control 108 includes one or more processors 302, a communication system 310 (e.g., including one or more network or other communications interfaces), memory 304, one or more input/output (I/O) interfaces (e.g., display 308 and/or input device 306) and one or more communication buses 312 for interconnecting these components.

In some embodiments, a touchscreen display includes display 308 and input device 306. A touchscreen display and processor(s) 302 optionally detect contact and movement using any suitable touch sensing technologies, including but not limited to capacitive, resistive, infrared, and surface acoustic wave technologies, as well as other proximity sensor arrays or other elements for determining one or more points of contact with the touchscreen display.

In some embodiments, input device 306 includes, e.g., one or more joysticks, switches, knobs, slide switches, buttons, dials, keypads, keyboard, mouse, audio transducers (e.g., microphone for voice control system), motion sensor, and/or gesture controls. In some embodiments, an I/O interface of remote control 108 includes sensors (e.g., GPS sensors, and/or accelerometers), audio output transducers (e.g., speaker), and/or one or more tactile output generators for generating tactile outputs. In some embodiments, input device 306 receives user input to control aspects of movable platform 102, carrier 104, payload 106, or a component thereof. Such aspects include, e.g., attitude, position, orientation, velocity, acceleration, navigation, tracking, and/or flight mode. In some embodiments, input device 306 is used to adjust an operational parameter of the payload, such as a parameter of a payload sensing system 212 (e.g., to adjust a zoom parameter of imaging device 216) and/or a position of payload 106 relative to carrier 104 and/or movable platform 102.

In some embodiments, the display device 308 displays information about movable platform 102, carrier 104, and/or payload 106, such as position, attitude, orientation, movement characteristics of movable platform 102, and/or distance between movable platform 102 and another object (e.g., target and/or an obstacle). In some embodiments, information displayed by display device 308 includes images captured by imaging device 216, tracking data (e.g., a graphical tracking indicator applied to a representation of target), and/or indications of control data transmitted to movable platform 102.

The communication system 310 enables communication with communication system 206 of movable platform 102, communication system 330 of computing device 110, and/or a base station (e.g., computing device 110) via a wired or wireless communication connection. In some embodiments, the communication system 310 transmits control instructions (e.g., navigation control instructions, target information, and/or tracking instructions). In some embodiments, the communication system 310 receives data (e.g., tracking data from payload imaging device 216, and/or data from movable object sensing system 210).

In some embodiments, memory 304 stores instructions for generating control instructions automatically and/or based on input received via input device 306. The control instructions include, e.g., control instructions for operating movement mechanisms 114 of movable platform 102, adjusting carrier 104, adjusting payload 106, and/or adjusting the operations of one or more sensors of movable object sensing system 210.

Figure 3B illustrates an exemplary computing device 110 for controlling movable platform 102, in accordance with embodiments. Computing device 110 is, e.g., a server computer, laptop computer, desktop computer, tablet, or phone. Computing device 110 typically includes one or more processing units 322, memory 324, communication system 330 and one or more communication buses 332 for interconnecting these components. In some embodiments, computing device 110 includes input/output (I/O) interfaces 326, e.g., display 336 and/or input device 334. In some embodiments, computing device 110 is a base station that communicates (e.g., wirelessly) with movable platform 102 and/or remote control 108.

In some embodiments, computing device 110 provides data storage, data retrieval, and/or data processing operations, e.g., to reduce the processing power and/or data storage requirements of movable platform 102 and/or remote control 108. For example, computing device 110 is communicatively connected to a database 338 (e.g., via communication system 330) and/or computing device 110 includes database 338 (e.g., database 338 is connected to communication bus 332).

Communication system 330 includes one or more network or other communications interfaces. In some embodiments, computing device 110 receives data from movable platform 102 (e.g., from one or more sensors of movable object sensing system 210) and/or remote control 108. In some embodiments, computing device 110 transmits data to movable platform 102 and/or remote control 108. For example, computing device 110 provides control instructions to movable platform 102.

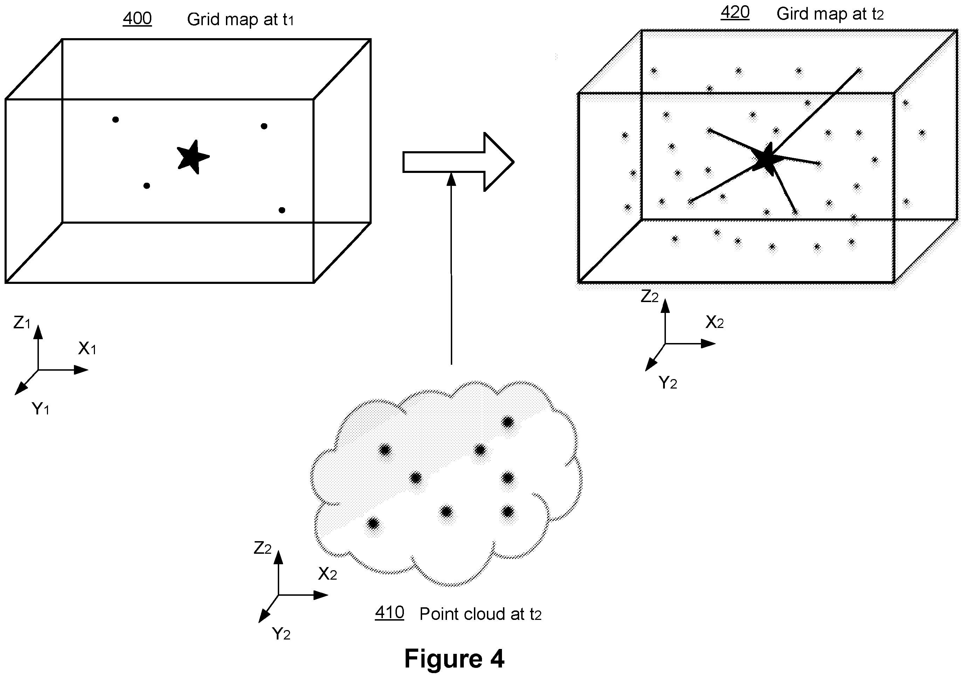

Figure 4 is a diagram illustrating an exemplary process of updating a grid map based on sensor data for the movable platform 102, in accordance with some embodiments. In some embodiments, the process shown in Figure 4 is performed by an electronic device such as the computing device 110 (Figures 1 and 3B), the remote control 108 (Figures 1 and 3A), or the movable platform 102 (Figures 1 and 2A-2B). In some other embodiments, the process of Figure 4 is performed by other electronic device(s), such as a mobile device or a computing device paired with the remote control 108 for operating the movable platform 102. In some embodiments, operations performed in Figure 4 correspond to instructions stored in computer memories or other computer-readable storage mediums of the corresponding device(s), such as memory 204 (Figure 2A), memory 304 (Figure 3A), or memory 324 (Figure 3B).

In some embodiments, the electronic device generates a grid map at a certain time point. In some embodiments, the grid map includes information related to existence and respective locations of one or more objects adjacent the movable platform 102 in a coordinate system. For example as shown in Figure 4, the electronic device generates grid map 400 at time point ti, and the grid map 400 includes one or more indicators, e.g., points. Each point of the grid map 400 represents existence of an object at the corresponding location (e.g., with coordinates [x,y,z]) in the coordinate system (x₁, y₁, z₁) at time point t₁ (note that one object may correspond to multiple points in the grid map 400). In some embodiments, the movable platform 102 is located near the center (e.g., at [0,0,0] corresponding to the star shape) of the coordinate system x₁,y₁,z₁ at time point ti.

In some embodiments, the respective locations of the one or more objects are detected by one or more sensors of the movable platform sensing system 210 at time point ti. In one example, one or more image sensors 262 (Figure 2B) associated with the movable platform 102 detect respective locations of one or more objects adjacent the movable platform 102. In another example, one or more audio transducers 268 (Figure 2B) associated with the movable platform 102 detect respective locations of one or more objects using sonar technology. In yet another example, one or more infrared sensors 274 (Figure 2B) associated with the movable platform 102 measure respective distances of one or more objects to the movable platform 102. In yet other examples, the VO system 288, the LiDar system 290, and/or the ultrasonic sensor 292 (Figure 2B) associated with the movable platform 102 are used to determine respective locations of objects.

In some embodiments, one or more sensors of the movable platform sensing system 210 detect existence and respective locations of one or more objects at time point t₂, which is a time point that occurs after time point t₁. In some embodiments as shown in Figure 4, a point cloud 410 is obtained based on the sensor data obtained by the one or more sensors associated with the movable platform 102 at time point t₂. In some embodiments, the point cloud 410 includes a plurality of indicators, e.g., points, and each point in the point cloud 410 represents existence of an object at a corresponding location detected by the one or more sensors at time point t₂. In some embodiments, the point cloud at time point t₂ uses a coordinate system (x₂, y₂, z₂), of which the movable platform 102 is located at the center (e.g., at [0,0,0]) at time point t₂. In some embodiments, the one or more points of the point cloud 410 are determined using any suitable algorithms, such as vision-based algorithms.

In some embodiments, the electronic device generates a grid map 420 at time point t₂, and the grid map 420 includes one or more points. Each point in the grid map 420 represents existence of an object at the corresponding location (e.g., with coordinates [x, y, z]) in the coordinate system (x₂, y₂, z₂) at time point t₂. The one or more points in a grid map represent respective objects that can be detected within detectable ranges of the one or more sensors associated with the movable platform 102. In some embodiments, the grid map 420 is generated by (1) transforming the grid map 400 from the coordinate system (x₁, y₁, z₁) to the coordinate system (x₂, y₂, z₂); and (2) incorporating the point cloud 410 into the grid map 420. In some embodiments, the transformation of coordinate system (x₁, y₁, z₁) to the coordinate system (x₂, y₂, z₂) is performed based on motion data, such as a speed and a moving direction of the movable platform 102 from time point t₁ to time point t₂. For example, if the movable platform 102 travels along the x₁ direction from time point t₁ to time point t₂ at an even speed of v, then the transformation between the two coordinate systems is: x₂ = x₁ + v(t₂-t₁), y₂ = y₁, and z₂ = zi. In some embodiments, the one or more points in the point cloud 410 are incorporated into the grid map 420, both of which use the same coordinate system. In some embodiments, when the point cloud 410 uses a different coordinate system from the grid map 420, a transformation is performed between the two different coordinate systems to incorporate the point cloud 410 into the grid map 420. Note that the transformation includes one or more of translational and rotational movements.

In some embodiments, the grid map is updated at a rate associated with a sampling rate of the one or more sensors. In some embodiments, the grid map is adaptively updated based on a moving speed of the movable platform 102 and/or a density of objects distributed along a moving direction of the movable platform 102. For example, the updating rate may be higher when the movable platform 102 is travelling at a faster speed. In another example, the updating rate may be higher when there are more objects distributed along a moving direction of the movable platform 102. In some embodiments, the updating rate of the grid map is 10 Hz, 50 Hz, 100 Hz, 200 Hz, 500 Hz, or 1000 Hz.

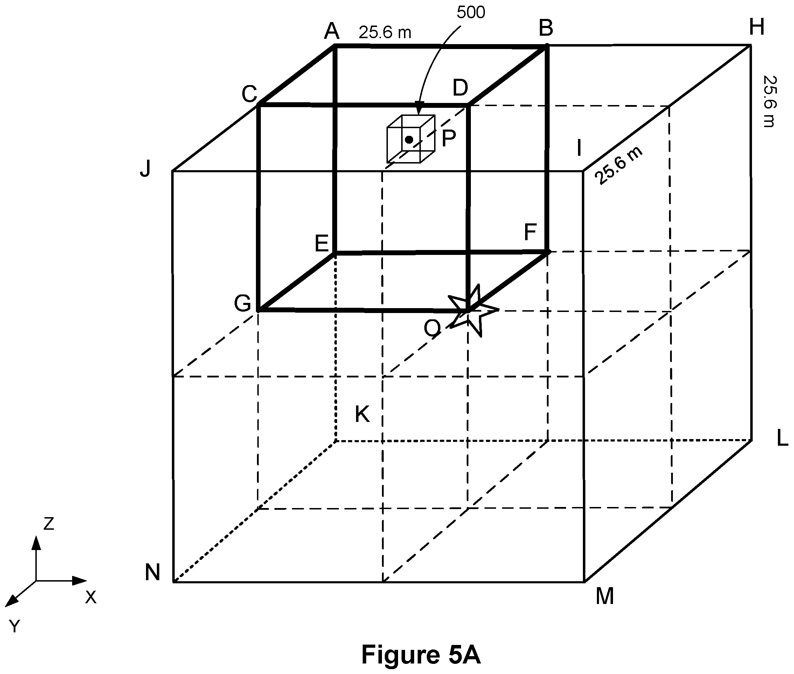

Figure 5A illustrates an exemplary embodiment for processing sensor data of the movable platform 102 by dividing a grid map, e.g., the grid map 420, into a plurality of divisions, in accordance with some embodiments. In some embodiments, the operations illustrated in Figure 5A are performed by an electronic device such as the computing device 110 (Figures 1 and 3B), the remote control 108 (Figures 1 and 3A), or the movable platform 102 (Figures 1 and 2A-2B). In some other embodiments, the operations illustrated in Figure 5A are performed by other electronic device(s), such as a mobile device or a computing device paired with the remote control 108 for operating the movable platform 102. In some embodiments, operations performed in Figure 5A correspond to instructions stored in computer memories or other computer-readable storage mediums of the corresponding device(s), such as memory 204 (Figure 2A), memory 304 (Figure 3A), or memory 324 (Figure 3B).

For example as shown in Figure 5A, the grid map 420, or a portion of the grid map 420 is represented by a cube AHIJ-KLMN In some embodiments, the movable platform 102 is located at the center, i.e., point O, within the cube AHIJ-KLMN. In some embodiments, based on the detectable range of the one or more sensors associated with the movable platform 102, the dimension of the cube AHIJ-KLMN is 25.6 meters * 25.6 meters * 25.6 meters. In some embodiments, the cube AHIJ-KLMN is divided into eight divisions, and each division corresponds to an octant of a three-dimensional coordinate system. Each division represents a moving range of the movable platform 102 corresponding to a region selected from (1) x>0, y>0, and z>0; (2) x<0, y>0, and z>0; (3) x<0, y<0, and z>0; (4) x>0, y<0, and z>0; (5) x>0, y>0, and z<0; (6) x<0, y>0, and z<0; (7) x<0, y<0, and z<0; or (8) x>0, y<0, and z<0. In some embodiments, the grid map represented by the cube AHIJ-KLMN includes a plurality of grid cells, such as grid cell 500 as shown in Figure 5A. In some embodiments, each grid cell is a small cube with a dimension ranging from 0.1 * 0.1 * 0.1 meter³ to 1.0 * 1.0 * 1.0 meter³ (note that the grid cell may be a cuboid of any dimension depending on the specific embodiments of the present application and it does not have to be a cube). In some embodiments, by dividing the cube AHIJ-KLMN into the above eight divisions, only the grid cells within one or more divisions, instead of the entire cube AHIJ-KLMN, need to be updated. For example, when the movable platform 102 is operated to avoid obstacles, only the grid cells within a division that corresponds to a moving direction of the movable platform 102 are updated. As such, data processing and updating can be much less time consuming.

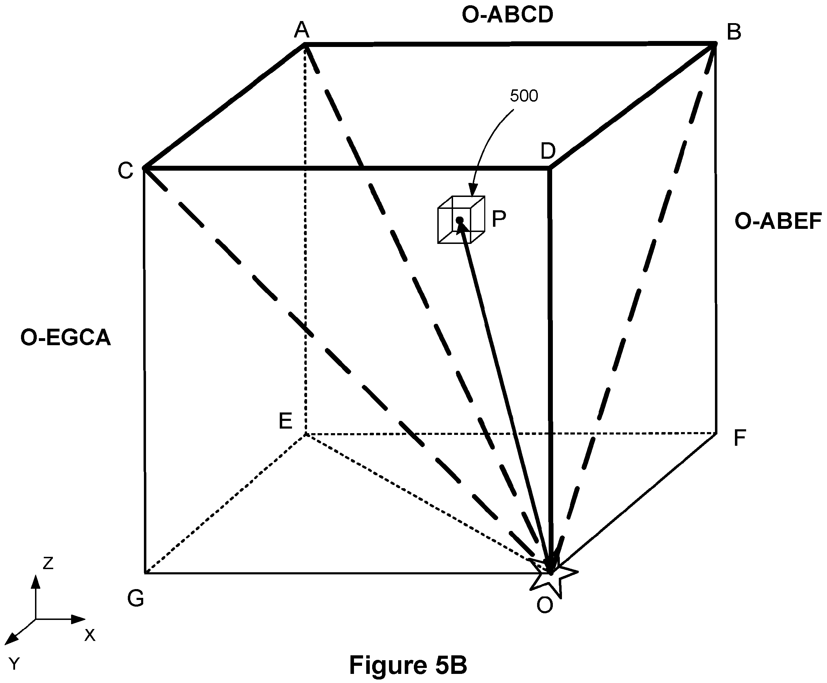

Figure 5B illustrates an exemplary embodiment for processing sensor data of the movable platform 102 by dividing a grid map into a plurality of subsets of grid cells, in accordance with some embodiments. In some embodiments, the operations illustrated in Figure 5B are performed by an electronic device such as the computing device 110 (Figures 1 and 3B), the remote control 108 (Figures 1 and 3A), or the movable platform 102 (Figures 1 and 2A-2B). In some other embodiments, the operations illustrated in Figure 5B are performed by other electronic device(s), such as a mobile device or a computing device paired with the remote control 108 for operating the movable platform 102. In some embodiments, operations performed in Figure 5B correspond to instructions stored in computer memories or other computer-readable storage mediums of the corresponding device(s), such as memory 204 (Figure 2A), memory 304 (Figure 3A), or memory 324 (Figure 3B).

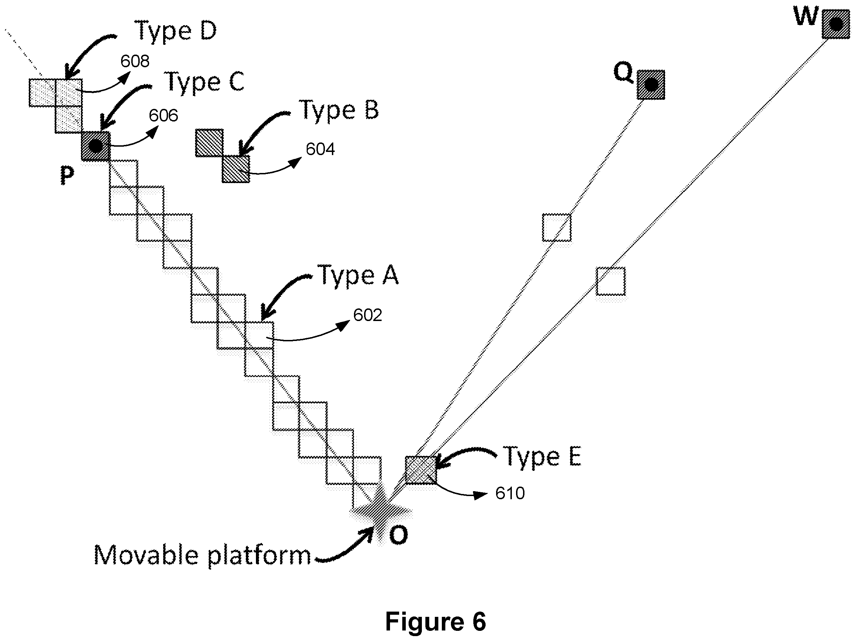

In some embodiments, the division ABCD-EFOG is divided into three subsets of grid cells, and each subset of grid cells corresponds to a respective polyhedron in a 3-dimensional space, such as polyhedron O-ABCD, polyhedron O-EGCA, or polyhedron O-ABFE. In some embodiments, each polyhedron has a vertex at the center of the 3-dimensional space (i.e., the center point O) and a base opposite to the vertex in the 3-dimensional space (e.g., ABCD, EGCA, or ABFE). In some embodiments, the movable platform 102 is located at the center of the 3-dimensional space, i.e., the center point O of the 3-dimensional cube AHIJ-KLMN In some embodiments, the movable platform 102 is located at a corner, i.e., corner O, of the division ABCD-EFOG. In some embodiments, the movable platform 102 is located at the vertex of each polyhedron within the division ABCD-EFOG. In some embodiments, each polyhedron includes a plurality of grid cells, e.g., grid cell 500. In some embodiments, each polyhedron represents a moving range of the movable platform 102 corresponding to a polyhedron in the 3-dimensional space. In some embodiments, each grid cell 500 is associated with a value which indicates a clearing status of ray casting through the corresponding grid cell at the current time point. In some embodiments, the ray (e.g., ray OP) casting corresponds to a virtual ray that starts from the movable platform 102 (e.g., the point O) and ends at an object, e.g., point P, detected within the division ABCD-EFOG. In some embodiments, the clearing status of the ray OP is determined and the respective values of one or more grid cells, including grid cell 500, are updated in accordance with an exemplary process discussed below in Figure 6.

Figure 6 illustrates various exemplary embodiments for updating respective values of grid cells in a grid map for the movable platform 102 based on ray casting status associated with the respective grid cells, in accordance with some embodiments. In some embodiments, the operations illustrated in Figure 6 are performed by an electronic device such as the computing device 110 (Figures 1 and 3B), the remote control 108 (Figures 1 and 3A), or the movable platform 102 (Figures 1 and 2A-2B). In some other embodiments, the operations illustrated in Figure 6 are performed by other electronic device(s), such as a mobile device or a computing device paired with the remote control 108 for operating the movable platform 102. In some embodiments, operations performed in Figure 6 correspond to instructions stored in computer memories or other computer-readable storage mediums of the corresponding device(s), such as memory 204 (Figure 2A), memory 304 (Figure 3A), or memory 324 (Figure 3B).

In some embodiments as discussed with reference to Figure 4, at a certain time point ti, the cell values of a plurality of grid cells within a grid map are updated based on a point cloud obtained at time point ti. The point cloud is obtained based on sensor data, including coordinates of one or more objects, e.g., corresponding to points P, Q, and W, in the environment that are detected by the one or more sensors associated with the movable platform 102.

In some embodiments, there are multiple types for updating the grid cells based on the ray casting status associated with the respective grid cells within the grid map. In some embodiments, the grid map includes one or more grid cells (referred to as "Type A" cells) that are passed through by a single ray at time point ti. In one example, a "Type A" cell 602 is passed through by a single ray, i.e., ray OP. In some embodiments, the cell value of a "Type A" cell is updated by increasing the cell value by a positive number (assuming that positive numbers are used for representing the presence of an object). For example, the cell value of the "Type A" cell 602 is increased by +1, which corresponds to a single ray passing through this cell at time point ti.

In some embodiments, the grid map includes one or more grid cells (referred to as "Type B" cells) that are not passed by any ray at time point ti. In one example, a "Type B" cell 604 is not passed by any ray at time point ti. In some embodiments, the cell value of a "Type B" cell is not updated, or is increased by a number smaller than the increased number for a "Type A" cell. For example, the cell value of the "Type B" cell 604 is increased by +0.5 or is unchanged (e.g., corresponding to a time-out state) at time point ti.

In some embodiments, the grid map includes one or more grid cells (referred to as "Type C" cells) that contains a detected object (e.g., corresponding to point P) at time point ti. In one example, a "Type C" cell 606 contains a detected object (e.g., corresponding to point P at which the ray is intercepted). In some embodiments, the cell value of a "Type C" cell is updated by decreasing the cell value. For example, the cell value of the "Type C" cell 606 is decreased by 2 (or changed by -2) at time point ti.

In some embodiments, the grid map includes one or more grid cells (referred to as "Type D" cells) that is located on an extension of a ray (e.g., ray OP) at time point ti. In one example, a "Type D" cell 608 is located on an extension of ray OP, and is not passed through by ray OP because the cell 608 is blocked by the cell containing the point P (i.e., cell 606). In some embodiments, the cell value of a "Type D" cell is updated in a similar way as a "Type B" cell. For example, the cell value of the "Type D" cell 608 is increased by +0.5 or is unchanged (e.g., corresponding to a time-out state) at time point ti.

In some embodiments, the grid map includes one or more grid cells (referred to as "Type E" cells) that are passed through by multiple rays at time point tᵢ. In one example, a "Type E" cell 610 is passed through by two rays, i.e., ray OQ and ray OW. In some embodiments, the cell value of a "Type E" cell is updated by increasing the cell value by a positive number corresponding to a number of the rays that pass through such "Type E" cell. For example, the cell value of the "Type E" cell 610 is increased by +2, which corresponds to two rays passing through this cell at time point ti.

In some embodiments, compared to a "Type A" cell at time point ti, more rays passing through a "Type E" cell, indicating that a path towards a "Type E" cell is clearer (e.g., preferable, with a lower possibility of hitting an obstacle on the path) than a path towards a "Type A" cell. In some embodiments, a path towards one or more cells having greater cell values is considered to be clearer, thus is preferred to be recommended to or planned for the movable platform 102 to move along to reduce the possibility of hitting an obstacle on the way.

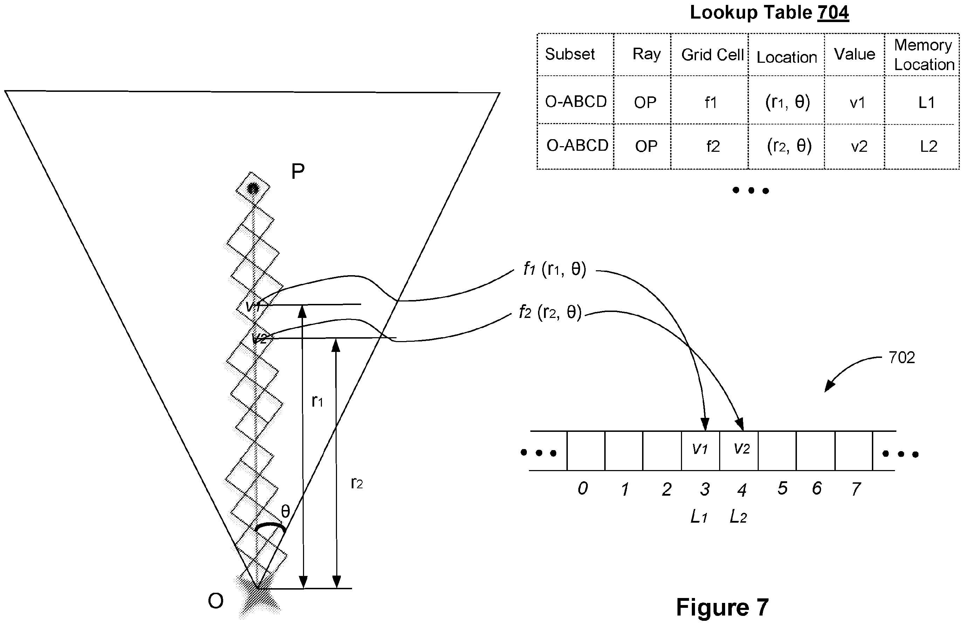

Figure 7 illustrates exemplary embodiments of storing, in a storage device (e.g., memory 204 shown in Figure 2A) accessible to, e.g., movable platform 102, values of a set of respective grid cells of a grid map based on ray casting for the movable platform 102, in accordance with some embodiments. In some embodiments, the storing operations illustrated in Figure 7 are performed by an electronic device such as the computing device 110 (Figures 1 and 3B), the remote control 108 (Figures 1 and 3A), or the movable platform 102 (Figures 1 and 2A-2B). In some other embodiments, the storing operations illustrated in Figure 7 are performed by other electronic device(s), such as a mobile device or a computing device paired with the remote control 108 for operating the movable platform 102. In some embodiments, the storing operations performed in Figure 7 correspond to instructions stored in computer memories or other computer-readable storage mediums of the corresponding device(s), such as memory 204 (Figure 2A), memory 304 (Figure 3A), or memory 324 (Figure 3B).

In some embodiments, the values of the grid cell within the same division (e.g., one of the eight divisions shown in Figure 5A) are stored in a physically contiguous memory region of the storage device (e.g., on-chip or off-chip memory). In some embodiments, the values of the grid cell within a subset of grid cells (e.g., polyhedron O-ABCD, polyhedron O-EGCA, or polyhedron O-ABFE) are further stored in a physically contiguous sub-region of the physically contiguous memory region corresponding to one of the polyhedrons for fast data storing and retrieving during route planning for the movable platform 102. For example, the storing operations may begin with storing the values of grid cells located near the center point O of the polyhedron O-ABCD, layer by layer along the depth edge OD of the polyhedron O-ABCD, until it reaches the bottom of the polyhedron O-ABCD. Within a layer of grid cells occupying a quadrilateral region at the same depth, the storing operations process the grid cells in a predefined manner, e.g., line by line along a particular direction, by allocating each grid value at a predefined location of the physically contiguous memory region of the storage device. Because the shape and dimension of the polyhedron O-ABCD are known, it is possible for the storing operations to perform the data access process at different layers in parallel or simultaneously, e.g., storing of grid values and retrieval of grid values, according to a predefined formula, which makes the data access process more efficient.

In some embodiments, the storing operations examine the values of grid cells located near the center point O of the polyhedron O-ABCD and skip those grid cells whose values is no greater than a predefined threshold until it locates the first grid cell or the first layer of grid cells whose values are greater than the predefined threshold for storing them in the physically contiguous memory region of the storage device. By doing so, it is possible to store more grid values within one physically contiguous memory region of the storage device when the grid values are used for quickly determining whether there is any object near the moveable platform 102 and, if so, what is the shortest distance between the moveable platform 102 and the potential object. Based on such determination, the moveable platform 102 maneuvers accordingly to avoid the potential object. In some embodiments, the storing operations only store the indexes of grid cells whose values are greater than a predefined threshold within a physically contiguous memory region of the storage device and use the indexes for determining the location of a possible object in a particular location because the index value of a grid cell corresponds to a particular location of the grid cell in the surrounding space of the moveable platform 102.

In some embodiments, the electronic device further generates a lookup table 704 for the values of grid cells distributed along ray OP, such as value v₁ for grid cell f₁, and value v₂ for grid cell f₂,. For easy access of the values of the grid cells when determining or updating the route of the movable platform 102. In some embodiments, the lookup table 704 includes a plurality of entries, and each entry stores information related to a grid cell. For example, a respective entry identifies a subset of grid cells to which the grid cells belong, a ray along which the grid cells are located, a location of a respective grid cell in the 3-dimensional space, a value of the respective grid cell, and a memory location for storing the corresponding entry. The lookup table 704 can be used for efficiently retrieving information associated with one or more grid cells distributed along a ray casting from the center O to a point corresponding to an object in the 3-dimensional space, such that the values of grid cells distributed along a casting ray can be analyzed within a short time for efficient route planning for the movable platform 102.

In one example, as shown in Figure 7, an entry for storing information of grid cell f₁ identifies a subset O-ABCD to which grid cell f₁ belongs, a ray OP along which grid cell f₁ is located, a location of the grid cell f₁ (e.g., (r₁, θ₁), where r₁ is a distance between grid cell f₁ and point O, and θ₁ is an angle between ray OP and a boundary of the subset O-ABCD), a value v₁ for grid cell f₁, and a memory location L₁ for storing this entry associated with grid cell f₁.

In another example, an entry for storing information of grid cell f₂ identifies a subset O-ABCD to which grid cell f₂ belongs, a ray OP along which grid cell f₂ is located, a location of the grid cell f₂ (e.g., (r₂, θ₂), where r₂ is a distance between grid cell f₂ and point O, and θ₂ is an angle between ray OP and a boundary of the subset O-ABCD), a value v₂ for grid cell f₂, and a memory location L₂ for storing this entry associated with grid cell f₂.

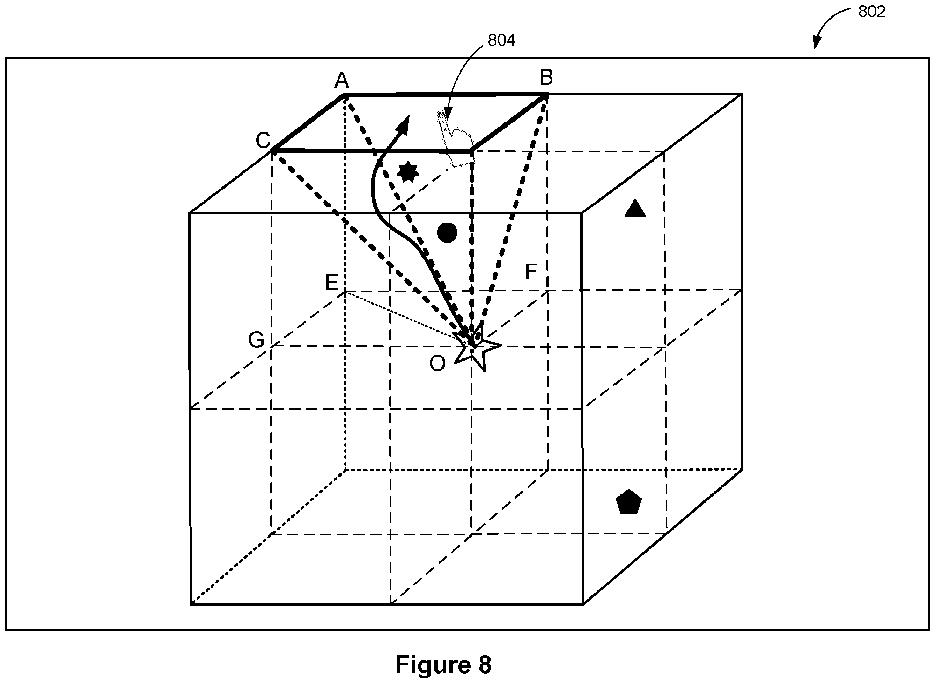

Figure 8 illustrates an exemplary user interface 802 for controlling the movable platform 102 located at center O of a grid map, in accordance with some embodiments. In some embodiments, the operations illustrated in Figure 8 are performed by an electronic device such as the computing device 110 (Figures 1 and 3B), the remote control 108 (Figures 1 and 3A), or the movable platform 102 (Figures 1 and 2A-2B). In some other embodiments, the operations illustrated in Figure 8 are performed by other electronic device(s), such as a mobile device or a computing device paired with the remote control 108 for operating the movable platform 102. In some embodiments, operations performed in Figure 8 correspond to instructions stored in computer memories or other computer-readable storage mediums of the corresponding device(s), such as memory 204 (Figure 2A), memory 304 (Figure 3A), or memory 324 (Figure 3B). In some embodiments, the user interface 802 is displayed on the display 308 of the remote control 108 (Figure 3A) or the display device 336 of the computing device 110 (Figure 3B).

In some embodiments as discussed with reference to Figures 5A-5B, the grid map (e.g., the cube) is divided into eight divisions, and each division is further divided into three subsets (e.g., polyhedrons) of grid cells. In some embodiments, the electronic device receives a user input 804 for requesting the movable platform 102 to move toward a direction at which the user finger points. In response to the user input 804, the electronic device selects a subset of grid cells (e.g., the polyhedron O-ABCD) from the plurality of subsets of grid cells based on the requested direction. In some embodiments, the electronic device retrieves entries corresponding to the selected subset of the grid cells (e.g., the polyhedron O-ABCD) using the lookup table (e.g., the lookup table 704, Figure 7) and updates the route for the movable platform based on the values of the selected subset of the grid cells accordingly. In some embodiments, the process in Figure 8 can be used for planning routes for the movable platform 102 to avoid obstacles.

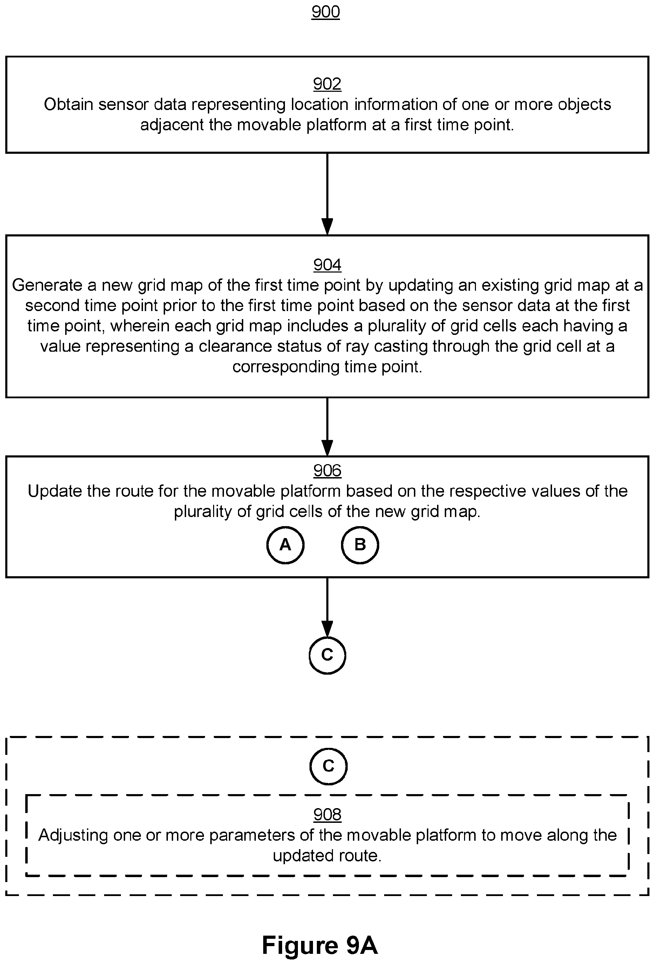

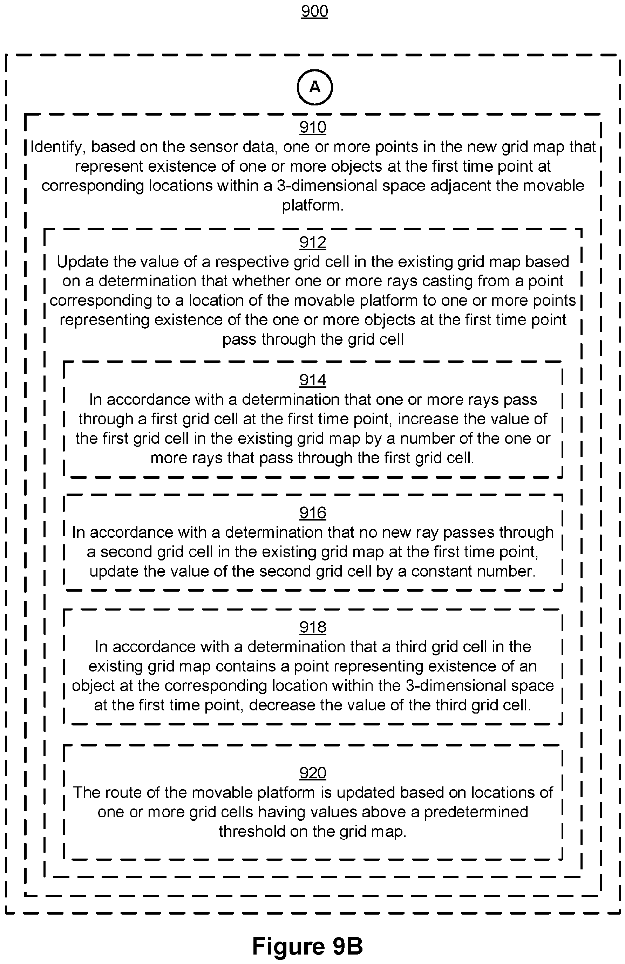

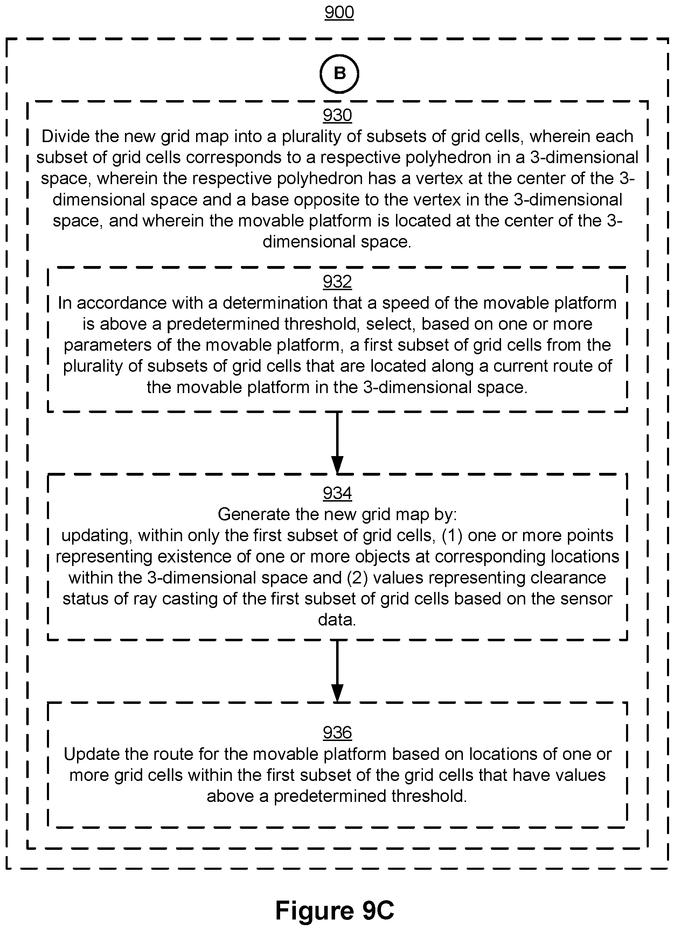

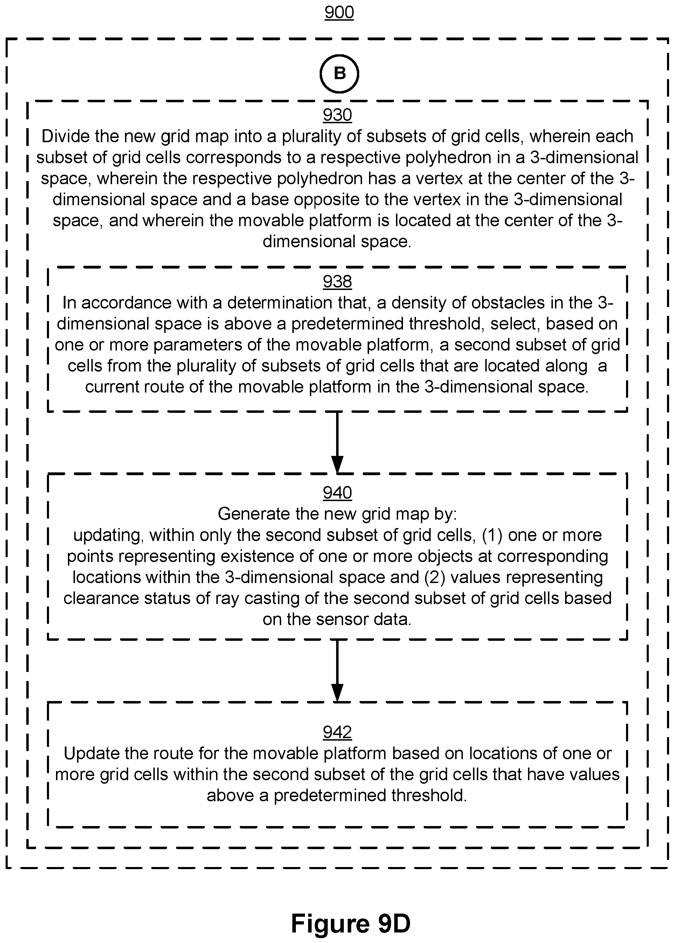

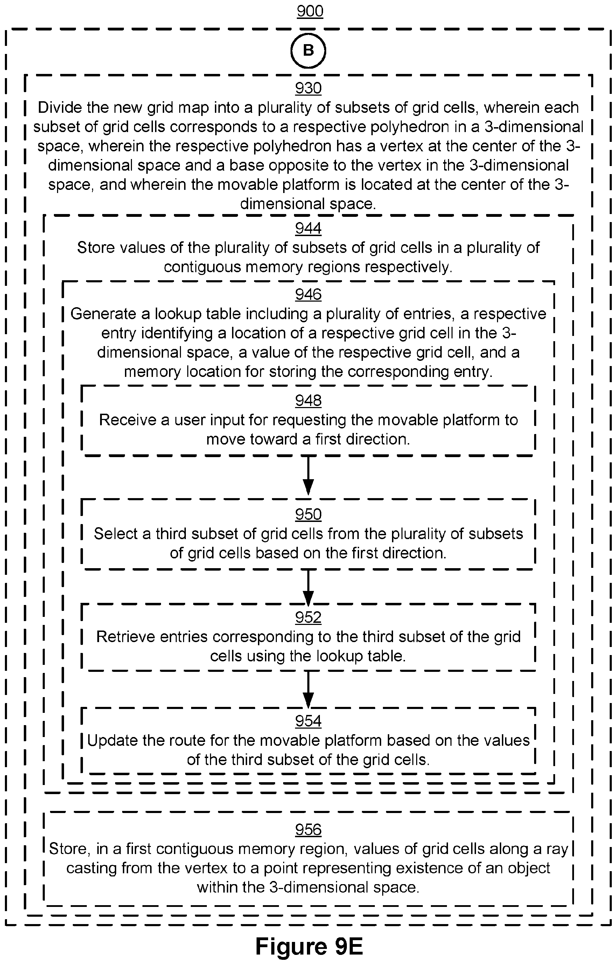

Figures 9A-9E are a flow diagram illustrating a method 900 of planning a route for the movable platform 102, in accordance with some embodiments. The method 900 is performed at an electronic device, such as the movable platform 102, the remote control 108, and/or the computing device 110. In some other embodiments, the method 900 is performed by other electronic device(s), such as a mobile device or a computing device paired with the remote control 108 for operating the movable platform 102. Operations performed in Figures 9A-9E correspond to instructions stored in computer memories or other computer-readable storage mediums of the corresponding device(s).

The electronic device obtains (902), sensor data representing location information of one or more objects adjacent the movable platform 102 at a first time point. In some embodiments, the sensor data is obtained by one or more sensors of the movable platform sensing system 210 (Figure 2B).

The electronic device generates (904) a new grid map of the first time point (e.g., the grid 420 of time point t₂, Figure 4) by updating an existing grid map at a second time point (e.g., the grid 400 of time point ti, Figure 4) prior to the first time point based on the sensor data at the first time point. In some embodiments, the sensor data is shown in a point cloud, such as the point cloud 410 of time point t₂. In some embodiments, each grid map includes a plurality of grid cells each having a value representing a clearance status of ray casting through the grid cell at a corresponding time point.

The electronic device updates (906) the route for the movable platform 102 based on the respective values of the plurality of grid cells of the new grid map. In some embodiments, the electronic device identifies (910), based on the sensor data, one or more points in the new grid map that represent existence of one or more objects at the first time point at corresponding locations within a 3-dimensional space adjacent the movable platform 102. In some embodiments, each grid map includes one or more indicators, such as points, and each point represents existence of an object at a corresponding location in the 3-dimensional space. In some embodiments, updating an existing grid map to generate a new grid map includes (1) transforming the existing map from a coordinate system at the second time point to a coordinate system at the first time point, and (2) incorporating the point cloud obtained at the first time into the grid map of the first time. For example as discussed with reference to Figure 4, to obtain the grid map 420 of time point t₂, the grid map 400 of time point t₁ is transformed from the coordinate system (x₁, y₁, z₁) to the coordinate system (x₂, y₂, z₂). Furthermore, the point cloud of time point t₂ is incorporated into the grid map 420 of time point t₂.

In some embodiments, the electronic device updates (912) the value of a respective grid cell in the existing grid map based on a determination that whether one or more rays casting from a point corresponding to a location of the movable platform 102 (e.g., the center point O, Figure 6) to one or more points representing existence of the one or more objects (e.g., the point P, Q, or W, Figure 6) at the first time point pass through the grid cell.

In some embodiments, in accordance with a determination that one or more rays pass through a first grid cell at the first time point, the electronic device increases (914) the value of the first grid cell in the existing grid map by a number of the one or more rays that pass through the first grid cell. For example as shown in Figure 6, because there is a single ray, e.g., ray OP, passes through the Type A cell 602, the electronic device increases the value of the cell 602 by +1. In another example, because there are two rays, e.g., ray OQ and ray OW, pass through the Type E cell 610, the electronic device increases the value of the cell 610 by +2.

In some embodiments, in accordance with a determination that no new ray passes through a second grid cell in the existing grid map at the first time point (e.g., there is no ray in the second grid cell at all or the rays are intercepted from reaching the second grid cell), the electronic device updates (916) the value of the second grid cell by a constant number. For example as shown in Figure 6, because there is no ray passing through the Type B cell 604 or the Type D cell 608 (note that the ray terminates at the cell 606), the value of the cell 604 or the value of the cell 608 remains unchanged. Alternatively, the electronic device increases the value of the cell 604 or the value of the cell 608 by +0.5.

In some embodiments, in accordance with a determination that a third grid cell in the existing grid map contains a point representing existence of an object at the corresponding location within the 3-dimensional space at the first time point, the electronic device decreases (918) the value of the third grid cell. For example as shown in Figure 6, because the Type C cell 606 contains a point P corresponding to an object in the 3-dimensional space, the value of the cell 606 is decreased by 2 (or changed by -2).

In some embodiments, the electronic device updates (920) the route of the movable platform 102 based on locations of one or more grid cells having values above a predetermined threshold on the grid map. For example, the electronic device identifies a route towards a grid cell having the greatest value. In another example, the electronic device identifies a route towards a grid cell having a value greater than a predetermined threshold. In some embodiments, the electronic device updates the grid map at a certain rate (e.g., 10 Hz, 50 Hz, 100 Hz, 200 Hz, 500 Hz, or 1000 Hz). Each time after updating the grid map, the electronic device determines one or more routes towards one or more grid cells having respective values greater than a predetermine threshold.

In some embodiments, the electronic device adjusts (908) one or more parameters of the movable platform 102 to move along the updated route. In some embodiments, the one or more parameters of the movable platform 102 include a speed, an acceleration, orientation angles (or attitude), an angular velocity, and/or the like.

In some embodiments, the electronic device divides (930) the new grid map into a plurality of subsets of grid cells. For example, as shown in Figure 5A, the cube AHIJ-KLMN is divided into eight divisions. In another example as shown in Figure 5B, each division is further divided into three polyhedrons. In some embodiments, each subset of grid cells corresponds to a respective polyhedron in a 3-dimensional space, such as polyhedron O-ABCD as shown in Figure 5B. In some embodiments, the respective polyhedron has a vertex at the center of the 3-dimensional space (e.g., the center point O) and a base opposite to the vertex in the 3-dimensional space. In some embodiments, the movable platform 102 is located at the center of the 3-dimensional space.

In some embodiments, in accordance with a determination that a speed of the movable platform 102 is above a predetermined threshold, the electronic device selects (932) based on one or more parameters of the movable platform, a subset of grid cells from the plurality of subsets of grid cells that are located along a current route of the movable platform in the 3-dimensional space. For example, when the movable platform 102 is travelling at a speed above 15 m/s, the electronic device determines a travelling direction of the movable platform 102. If the travelling direction is contained within a certain polyhedron, such as polyhedron O-ABCD, only the grid cells within the polyhedron O-ABCD are updated. In some embodiments, the electronic device generates (934) the new grid map by updating (934) (1) one or more points representing existence of one or more objects at corresponding locations within the 3-dimensional space (e.g., the polyhedron O-ABCD) and (2) values representing clearance status of ray casting of the first subset of grid cells based on the sensor data within only the first subset of grid cells (e.g., the polyhedron O-ABCD). In some embodiments, the electronic device updates (936) the route for the movable platform 102 based on locations of one or more grid cells within the first subset of the grid cells (e.g., the polyhedron O-ABCD) that have values above a predetermined threshold.

In some embodiments, in accordance with a determination that a density of objects in the 3-dimensional space is above a predetermined threshold, the electronic device selects (938) based on one or more parameters of the movable platform, a subset of grid cells from the plurality of subsets of grid cells that are located along a current route of the movable platform in the 3-dimensional space. For example, when there are the objects are distributed densely adjacent the movable platform 102, the electronic device determines a travelling direction of the movable platform 102 based on the current parameters of the movable platform 102. If the travelling direction is contained within a certain polyhedron, such as polyhedron O-ABEF, only the grid cells within the polyhedron O-ABEF are updated. In some embodiments, the electronic device generates (940) the new grid map by updating (940) (1) one or more points representing existence of one or more objects at corresponding locations within the 3-dimensional space (e.g., the polyhedron O-ABEF) and (2) values representing clearance status of ray casting of the second subset of grid cells based on the sensor data within only the second subset of grid cells (e.g., the polyhedron O-ABEF). In some embodiments, the electronic device updates (942) the route for the movable platform 102 based on locations of one or more grid cells within the second subset of the grid cells (e.g., the polyhedron O-ABCD) that have values above a predetermined threshold.

In some embodiments, the electronic device stores (944) values of the plurality of subsets of grid cells in a plurality of contiguous memory regions respectively. For example, as discussed in Figure 7, the grid cells f₁ and f₂ located within the same subset of grid cells in contiguous memory regions 702. In some embodiments, the electronic device generates (946) a lookup table (e.g., the lookup table 704, Figure 7) including a plurality of entries. A respective entry identifies a location of a respective grid cell in the 3-dimensional space (e.g., location (r₁, θ₁) for grid cell fi), a value of the respective grid cell (e.g., v₁ for grid cell fi), and a memory location for storing the corresponding entry (e.g., L₁ for grid cell fi).

In some embodiments, the electronic device receives (948) a user input (e.g., the user input 804, Figure 8) for requesting the movable platform 102 to move toward a first direction. In some embodiments, the electronic device selects (950) a subset of grid cells (e.g., the grid cells included in the polyhedron O-ABCD, Figure 8) from the plurality of subsets of grid cells based on the first direction. In some embodiments, the electronic device retrieves (952) entries corresponding to the subset of the grid cells using the lookup table. For example as shown in Figure 7, the electronic device retrieves entries associated with the grid cells located within the polyhedron O-ABCD. In some embodiments, the electronic device updates (954) the route for the movable platform 102 based on the values of the subset of the grid cells. For example as shown in Figure 7, the electronic device plans or updates the route for the movable platform 102 based on the values of the grid cells included in the retrieved entries from the lookup table 704.

In some embodiments, the electronic device stores (956) values of grid cells along a ray casting from the vertex to a point representing existence of an object within the 3-dimensional space in contiguous memory regions. For example as shown in Figure 7, grid cells f₁ and f₂ are located along ray OP, and information associated with grid cells f₁ and f₂ are stored in contiguous memory regions L₁ and L₂ respectively.

Many features of the present invention can be performed in, using, or with the assistance of hardware, software, firmware, or combinations thereof. Consequently, features of the present invention may be implemented using a processing system. Exemplary processing systems (e.g., processor(s) 202, processors 302 of the remote control 108, and/or processors 322 of the computing device 110) include, without limitation, one or more general purpose microprocessors (for example, single or multi-core processors), application-specific integrated circuits, application-specific instruction-set processors, field-programmable gate arrays, graphics processors, physics processors, digital signal processors, coprocessors, network processors, audio processors, encryption processors, and the like.

Features of the present invention can be implemented in, using, or with the assistance of a computer program product, such as a storage medium (media) or computer readable storage medium (media) having instructions stored thereon/in which can be used to program a processing system to perform any of the features presented herein. The storage medium (e.g., the memory 204) can include, but is not limited to, any type of disk including floppy disks, optical discs, DVD, CD-ROMs, microdrive, and magneto-optical disks, ROMs, RAMs, EPROMs, EEPROMs, DRAMs, VRAMs, DDR RAMs, flash memory devices, magnetic or optical cards, nanosystems (including molecular memory ICs), or any type of media or device suitable for storing instructions and/or data.

Stored on any one of the machine readable medium (media), features of the present invention can be incorporated in software and/or firmware for controlling the hardware of a processing system, and for enabling a processing system to interact with other mechanism utilizing the results of the present invention. Such software or firmware may include, but is not limited to, application code, device drivers, operating systems, and execution environments/containers.

Communication systems as referred to herein (e.g., the communication system 206) optionally communicate via wired and/or wireless communication connections. For example, communication systems optionally receive and send RF signals, also called electromagnetic signals. RF circuitry of the communication systems convert electrical signals to/from electromagnetic signals and communicate with communications networks and other communications devices via the electromagnetic signals. RF circuitry optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. Communication systems optionally communicate with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. Wireless communication connections optionally use any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Wireless Fidelity (Wi-Fi) (e.g., IEEE 102.11a, IEEE 102.11ac, IEEE 102.11ax, IEEE 102.11b, IEEE 102.11g and/or IEEE 102.11n), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), spread spectrum technology such as FASST or DESST, or any other suitable communication protocol, including communication protocols not yet developed as of the filing date of this document.

While various embodiments of the present invention have been described above, it should be understood that they have been presented by way of example, and not limitation. It will be apparent to persons skilled in the relevant art that various changes in form and detail can be made therein without departing from the spirit and scope of the invention.

The present invention has been described above with the aid of functional building blocks illustrating the performance of specified functions and relationships thereof. The boundaries of these functional building blocks have often been arbitrarily defined herein for the convenience of the description. Alternate boundaries can be defined so long as the specified functions and relationships thereof are appropriately performed. Any such alternate boundaries are thus within the scope and spirit of the invention.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method of planning a route for a movable platform (102), the method comprising:
at an electronic device having one or more processors (202) and memory (202) storing instructions for execution by the one or more processors (202):
obtaining sensor data representing location information of one or more objects adjacent the movable platform (102) at a first time point;
generating a new grid map (420) of the first time point by updating an existing grid map (400) at a second time point prior to the first time point based on the sensor data at the first time point,
wherein each grid map includes a plurality of grid cells (500) each having a value representing a clearance status of ray casting through the grid cell at a corresponding time point,
wherein generating the new grid map (420) of the first time point further comprises: identifying, based on the sensor data, one or more points in the new grid map (420) that represent existence of one or more objects at the first time point at corresponding locations within a 3-dimensional space adjacent the movable platform (102), and
wherein generating the new grid map (420) of the first time point further comprises: updating the value of a respective grid cell in the existing grid map (400) based on a determination that whether one or more rays casting from a point corresponding to a location of the movable platform (102) to one or more points representing existence of the one or more objects at the first time point pass through the grid cell; and
wherein the method is **characterized**
**by** in accordance with a determination that a number of rays pass through a first grid cell (610) at the first time point, increasing the value of the first grid cell in the existing grid map (400) by the number of the rays that pass through the first grid cell, and
by updating the route for the movable platform (102) based on the respective values of the plurality of grid cells (500) of the new grid map (420).

2. The method of claim 1, further comprising:
in accordance with a determination that no new ray passes through a second grid cell (604) in the existing grid map (400) at the first time point, updating the value of the second grid cell by a constant number.

3. The method of claim 1, further comprising:
in accordance with a determination that a third grid cell (606) in the existing grid map (400) contains a point representing existence of an object at the corresponding location within the 3-dimensional space at the first time point, decreasing the value of the third grid cell.

4. The method of claim 1, wherein the route of the movable platform (102) is updated based on locations of one or more grid cells having values above a predetermined threshold on the grid map.

5. The method of claim 1, further comprising:
adjusting one or more parameters of the movable platform (102) to move along the updated route.

6. The method of claim 1, further comprising:
dividing the new grid map (420) into a plurality of subsets of grid cells, wherein each subset of grid cells corresponds to a respective polyhedron in a 3-dimensional space, wherein the respective polyhedron has a vertex at the center of the 3-dimensional space and a base opposite to the vertex in the 3-dimensional space, and wherein the movable platform (102) is located at the center of the 3-dimensional space.

7. The method of claim 6, further comprising:
in accordance with a determination that a speed of the movable platform (102) is above a predetermined threshold,
selecting, based on one or more parameters of the movable platform (102), a first subset of grid cells from the plurality of subsets of grid cells that are located along a current route of the movable platform (102) in the 3-dimensional space,
wherein generating the new grid map (420) comprises:
updating, within only the first subset of grid cells, (1) one or more values representing existence of one or more objects at corresponding locations within the 3-dimensional space and (2) values representing clearance status of ray casting of the first subset of grid cells based on the sensor data, preferably
wherein updating the route comprises updating the route for the movable platform (102) based on locations of one or more grid cells within the first subset of the grid cells that have values above a predetermined threshold.

8. The method of claim 6, further comprising:
in accordance with a determination that, a density of obstacles in the 3-dimensional space is above a predetermined threshold,
selecting, based on one or more parameters of the movable platform (102), a second subset of grid cells from the plurality of subsets of grid cells that are located along a current route of the movable platform (102) in the 3-dimensional space,
wherein generating the new grid map (420) comprises:
updating, within only the second subset of grid cells, (1) one or more points representing existence of one or more objects at corresponding locations within the 3-dimensional space and (2) values representing clearance status of ray casting of the second subset of grid cells based on the sensor data, preferably
wherein updating the route comprises updating the route for the movable platform (102) based on locations of one or more grid cells within the second subset of the grid cells that have values above a predetermined threshold.

9. The method of claim 6, further comprising:
storing, in a first contiguous memory region, values of grid cells along a ray casting from the vertex to a point representing existence of an object within the 3-dimensional space, or
storing values of the plurality of subsets of grid cells in a plurality of contiguous memory regions respectively,
further comprising:
generating a lookup table including a plurality of entries, a respective entry identifying a location of a respective grid cell in the 3-dimensional space, a value of the respective grid cell, and a memory location for storing the corresponding entry.

10. The method of claim 9, further comprising:
receiving a user input for requesting the movable platform (102) to move toward a first direction;
selecting a third subset of grid cells from the plurality of subsets of grid cells based on the first direction;
retrieving entries corresponding to the third subset of the grid cells using the lookup table; and
updating the route for the movable platform (102) based on the values of the third subset of the grid cells.

11. A system for planning a route for a movable platform (102), the system comprising:
one or more processors (202);
memory (202); and
one or more programs, wherein the one or more programs are stored in the memory (202) and configured to be executed by the one or more processors (202), the one or more programs including instructions for performing the operations of the method of any one of claims 1 to 10.

12. A non-transitory computer readable storage medium storing one or more programs, the one or more programs comprising instructions, which when executed by an electronic device, cause the electronic device to perform instructions for performing the operations of the method of any one of claims 1 to 10.

## Patentansprüche

1. Verfahren zum Planen einer Route für eine bewegbare Plattform (102), wobei das Verfahren Folgendes umfasst:
an einer elektronischen Vorrichtung mit einem oder mehreren Prozessoren (202) und einem Speicher (202) Speichern von Anweisungen zur Ausführung durch den einen oder die mehreren Prozessoren (202):
Erhalten von Sensordaten, die Standortinformationen von einem oder mehreren Objekten, die der bewegbaren Plattform (102) benachbart sind, repräsentieren, zu einem ersten Zeitpunkt;
Erzeugen einer neuen Rasterkarte (420) des ersten Zeitpunkts durch Aktualisieren einer bestehenden Rasterkarte (400) zu einem zweiten Zeitpunkt vor dem ersten Zeitpunkt auf Basis der Sensordaten zum ersten Zeitpunkt,
wobei jede Rasterkarte eine Vielzahl von Rasterzellen (500) beinhaltet, von denen jede einen Wert aufweist, der einen Abstandsstatus des Raycasting durch die Rasterzelle zu einem entsprechenden Zeitpunkt repräsentiert,
wobei das Erzeugen der neuen Rasterkarte (420) des ersten Zeitpunkts ferner Folgendes umfasst: Identifizieren von einem oder mehreren Punkten in der neuen Rasterkarte (420), die das Vorhandensein von einem oder mehreren Objekten zum ersten Zeitpunkt an entsprechenden Standorten in einem 3-dimensionalen Raum in der Nachbarschaft der bewegbaren Plattform (102) repräsentieren, auf Basis der Sensordaten, und
wobei das Erzeugen der neuen Rasterkarte (420) des ersten Zeitpunkts ferner Folgendes umfasst: Aktualisieren des Wertes einer jeweiligen Rasterzelle in der bestehenden Rasterkarte (400) auf einer Bestimmung basierend, dass ob ein oder mehrere Raycastings von einem Punkt, der einem Standort der bewegbaren Plattform (102) entspricht, zu einem oder mehreren Punkten, die das Vorhandensein des einen oder der mehreren Objekte zum ersten Zeitpunkt repräsentieren, durch die Rasterzelle verlaufen; und
wobei das Verfahren durch Folgendes gekennzeichnet ist
gemäß einer Bestimmung, dass eine Anzahl von Strahlen durch eine erste Rasterzelle (610) verlaufen, Erhöhen des Wertes der ersten Rasterzelle in der bestehenden Rasterkarte (400) um die Anzahl von Strahlen, die durch die erste Rasterzelle verlaufen, und
Aktualisieren der Route für die bewegbare Plattform (102) auf Basis der jeweiligen Werte der Vielzahl von Rasterzellen (500) der neuen Rasterkarte (420).

2. Verfahren nach Anspruch 1, das ferner Folgendes umfasst:
gemäß einer Bestimmung, dass zum ersten Zeitpunkt keine neuen Strahlen durch eine zweite Rasterzelle (604) in der bestehenden Rasterkarte (400) verlaufen, Aktualisieren des Wertes der zweiten Rasterzelle um eine konstante Anzahl.

3. Verfahren nach Anspruch 1, das ferner Folgendes umfasst:
gemäß einer Bestimmung, dass eine dritte Rasterzelle (606) in der bestehenden Rasterkarte (400) zum ersten Zeitpunkt einen Punkt enthält, der das Vorhandensein eines Objekts am entsprechenden Standort innerhalb des 3-dimensionalen Raums repräsentiert, Erhöhen des Wertes der dritten Rasterzelle.

4. Verfahren nach Anspruch 1, wobei die Route der bewegbaren Plattform (102) auf Basis von Standorten von einer oder mehreren Rasterzellen, die Werte über einem vorbestimmten Schwellwert auf der Rasterkarte aufweisen, aktualisiert wird.

5. Verfahren nach Anspruch 1, das ferner Folgendes umfasst:
Anpassen von einem oder mehreren Parametern der bewegbaren Plattform (102) zum Bewegen entlang der aktualisierten Route.

6. Verfahren nach Anspruch 1, das ferner Folgendes umfasst:
Teilen der neuen Rasterkarte (420) in eine Vielzahl von Untersätzen von Rasterzellen, wobei jeder Untersatz von Rasterzellen einem jeweiligen Polyeder in einem 3-dimensionalen Raum entspricht, wobei das jeweilige Polyeder eine Spitze in der Mitte des 3-dimensionalen Raums und eine Basis gegenüber der Spitze im 3-dimensionalen Raum aufweist und wobei sich die bewegbare Plattform (102) in der Mitte des 3-dimensionalen Raums befindet.

7. Verfahren nach Anspruch 6, das ferner Folgendes umfasst:
gemäß einer Bestimmung, dass eine Geschwindigkeit der bewegbaren Plattform (102) über einem vorbestimmten Schwellwert liegt,
Auswählen eines ersten Untersatzes von Rasterzellen aus der Vielzahl von Untersätzen von Rasterzellen, die sich entlang einer aktuellen Route der bewegbaren Plattform (102) im 3-dimensionalen Raum befinden, auf Basis von einem oder mehreren Parametern der bewegbaren Plattform (102), wobei das Erzeugen der neuen Rasterkarte (420) Folgendes umfasst:
Aktualisieren (1) von einem oder mehreren Werten, die das Vorhandensein von einem oder mehreren Objekten an entsprechenden Standorten im 3-dimensionalen Raum repräsentieren, und (2) von Werten, die einen Abstandsstatus des Raycasting des ersten Untersatzes von Rasterzellen repräsentieren, auf Basis der Sensordaten nur im ersten Untersatz von Rasterzellen, vorzugsweise
wobei das Aktualisieren der Route das Aktualisieren der Route für die bewegbare Plattform (102) auf Basis von Standorten von einer oder mehreren Rasterzellen im ersten Untersatz von Rasterzellen, die Werte über einem vorbestimmten Schwellwert aufweisen, umfasst.

8. Verfahren nach Anspruch 6, das ferner Folgendes umfasst:
gemäß einer Bestimmung, dass eine Dichte von Hindernissen im 3-dimensionalen Raum über einem vorbestimmten Schwellwert liegt,
Auswählen eines zweiten Untersatzes von Rasterzellen aus der Vielzahl von Untersätzen von Rasterzellen, die sich entlang einer aktuellen Route der bewegbaren Plattform (102) im 3-dimensionalen Raum befinden, auf Basis von einem oder mehreren Parametern der bewegbaren Plattform (102),
wobei das Erzeugen der neuen Rasterkarte (420) Folgendes umfasst:
Aktualisieren (1) von einem oder mehreren Punkten, die das Vorhandensein von einem oder mehreren Objekten an entsprechenden Standorten im 3-dimensionalen Raum repräsentieren, und (2) von Werten, die einen Abstandsstatus des Raycasting des zweiten Untersatzes von Rasterzellen repräsentieren, auf Basis der Sensordaten nur im zweiten Untersatz von Rasterzellen, vorzugsweise
wobei das Aktualisieren der Route das Aktualisieren der Route für die bewegbare Plattform (102) auf Basis von Standorten von einer oder mehreren Rasterzellen im zweiten Untersatz von Rasterzellen, die Werte über einem vorbestimmten Schwellwert aufweisen, umfasst.

9. Verfahren nach Anspruch 6, das ferner Folgendes umfasst:
Speichern von Werten von Rasterzellen entlang eines Raycasting von der Spitze zu einem Punkt, der das Vorhandensein eines Objekts im 3-dimensionalen Raum repräsentiert, in einer ersten durchgehenden Speicherregion oder
Speichern von Werten der Vielzahl von Untersätzen von Rasterzellen jeweils in einer Vielzahl von durchgehenden Speicherregionen,
das ferner Folgendes umfasst:
Erzeugen einer Nachschlagetabelle, die eine Vielzahl von Einträgen beinhaltet, wobei ein jeweiliger Eintrag einen Standort einer jeweiligen Rasterzelle im 3-dimensionalen Raum, einen Wert der jeweiligen Rasterzelle und einen Speicherort zum Speichern des jeweiligen Eintrags identifiziert.

10. Verfahren nach Anspruch 9, das ferner Folgendes umfasst:
Empfangen einer Benutzereingabe zum Anfordern, dass sich die bewegbare Plattform (102) in eine erste Richtung bewegt;
Auswählen eines dritten Untersatzes von Rasterzellen aus der Vielzahl von Untersätzen von Rasterzellen auf Basis der ersten Richtung;
Abrufen von Einträgen, die dem dritten Untersatz der Rasterzellen entsprechen, unter Verwendung der Nachschlagetabelle und
Aktualisieren der Route für die bewegbare Plattform (102) auf Basis der Werte des dritten Untersatzes der Rasterzellen.

11. System zum Planen einer Route für eine bewegbare Plattform (102), wobei das System Folgendes umfasst:
einen oder mehrere Prozessoren (202);
Speicher (202) und
ein oder mehrere Programme, wobei das eine oder die mehreren Programme im Speicher (202) gespeichert und dazu ausgelegt sind, von dem einen oder den mehreren Prozessoren (202) ausgeführt zu werden, wobei das eine oder die mehreren Programme Anweisungen zum Durchführen der Operationen des Verfahrens nach einem der Ansprüche 1 bis 10 beinhalten.

12. Nichttransitorisches computerlesbares Speichermedium, in dem ein oder mehrere Programme gespeichert sind, wobei das eine oder die mehreren Programme Anweisungen umfassen, die, wenn sie von einer elektronischen Vorrichtung ausgeführt werden, die elektronische Vorrichtung veranlassen, Anweisungen zum Durchführen der Operationen des Verfahrens nach einem der Ansprüche 1 bis 10 durchzuführen.

## Revendications

1. Procédé de planification d'un itinéraire pour une plateforme mobile (102), le procédé comprenant les étapes ci-dessous consistant à :
au niveau d'un dispositif électronique présentant un ou plusieurs processeurs (202) et une mémoire (202) stockant des instructions destinées à être exécutées par ledit un ou lesdits plusieurs processeurs (202) :
obtenir des données de capteur représentant des informations de localisation d'un ou plusieurs objets adjacents à la plateforme mobile (102), à un premier point temporel ;
générer une nouvelle carte de grille (420) du premier point temporel en mettant à jour une carte de grille existante (400) à un second point temporel précédent le premier point temporel, sur la base des données de capteur au premier point temporel ;
dans lequel chaque carte de grille inclut une pluralité de cellules de grille (500) présentant chacune une valeur représentant un état d'autorisation de lancer de rayons à travers la cellule de grille à un point temporel correspondant ;
dans lequel l'étape de génération de la nouvelle carte de grille (420) du premier point temporel comprend en outre l'étape consistant à : identifier, sur la base des données de capteur, un ou plusieurs points dans la nouvelle carte de grille (420) qui représentent l'existence d'un ou plusieurs objets au premier point temporel à des emplacements correspondants dans un espace tridimensionnel adjacent à la plateforme mobile (102) ; et
dans lequel l'étape de génération de la nouvelle carte de grille (420) du premier point temporel comprend en outre l'étape consistant à : mettre à jour la valeur d'une cellule de grille respective dans la carte de grille existante (400) sur la base d'une détermination selon laquelle un ou plusieurs rayons lancés depuis un point correspondant à un emplacement de la plateforme mobile (102) vers un ou plusieurs points représentant l'existence dudit un ou desdits plusieurs objets au premier point temporel transitent par la cellule de grille ; et
dans lequel le procédé est **caractérisé par** les étapes consistant à :
conformément à une détermination selon laquelle un nombre de rayons transite par une première cellule de grille (610) au premier point temporel, augmenter la valeur de la première cellule de grille dans la carte de grille existante (400), du nombre des rayons qui transitent par la première cellule de grille ; et
mettre à jour l'itinéraire pour la plateforme mobile (102) sur la base des valeurs respectives de la pluralité de cellules de grille (500) de la nouvelle carte de grille (420).

2. Procédé selon la revendication 1, comprenant en outre l'étape ci-dessous consistant à :
conformément à une détermination selon laquelle aucun nouveau rayon ne transite par une deuxième cellule de grille (604) dans la carte de grille existante (400) au premier point temporel, mettre à jour la valeur de la deuxième cellule de grille par un nombre constant.

3. Procédé selon la revendication 1, comprenant en outre l'étape ci-dessous consistant à :
conformément à une détermination selon laquelle une troisième cellule de grille (606) dans la carte de grille existante (400) contient un point représentant l'existence d'un objet à l'emplacement correspondant dans l'espace tridimensionnel au premier point temporel, diminuer la valeur de la troisième cellule de grille.

4. Procédé selon la revendication 1, dans lequel l'itinéraire de la plateforme mobile (102) est mis à jour sur la base d'emplacements d'une ou plusieurs cellules de grille présentant des valeurs supérieures à un seuil prédéterminé sur la carte de grille.

5. Procédé selon la revendication 1, comprenant en outre l'étape ci-dessous consistant à :
ajuster un ou plusieurs paramètres de la plateforme mobile (102) pour un déplacement le long de l'itinéraire mis à jour.

6. Procédé selon la revendication 1, comprenant en outre l'étape ci-dessous consistant à :
diviser la nouvelle carte de grille (420) en une pluralité de sous-ensembles de cellules de grille, dans lequel chaque sous-ensemble de cellules de grille correspond à un polyèdre respectif dans un espace tridimensionnel, dans lequel le polyèdre respectif présente un sommet au centre de l'espace tridimensionnel et une base opposée au sommet dans l'espace tridimensionnel, et dans lequel la plateforme mobile (102) est située au centre de l'espace tridimensionnel.

7. Procédé selon la revendication 6, comprenant en outre l'étape ci-dessous consistant à :
conformément à une détermination selon laquelle une vitesse de la plateforme mobile (102) est supérieure à un seuil prédéterminé,
sélectionner, sur la base d'un ou plusieurs paramètres de la plateforme mobile (102), un premier sous-ensemble de cellules de grille parmi la pluralité de sous-ensembles de cellules de grille qui sont situés le long d'un itinéraire en cours de la plateforme mobile (102) dans l'espace tridimensionnel ;
dans lequel l'étape de génération de la nouvelle carte de grille (420) comprend l'étape ci-dessous consistant à :
mettre à jour, uniquement au sein du premier sous-ensemble de cellules de grille, (1) une ou plusieurs valeurs représentant l'existence d'un ou plusieurs objets à des emplacements correspondants dans l'espace tridimensionnel, et (2) des valeurs représentant un état d'autorisation de lancer de rayons du premier sous-ensemble de cellules de grille sur la base des données de capteur, de préférence dans lequel l'étape de mise à jour de l'itinéraire consiste à mettre à jour l'itinéraire pour la plateforme mobile (102) sur la base d'emplacements d'une ou plusieurs cellules de grille, dans le premier sous-ensemble de cellules de grille, qui présentent des valeurs supérieures à un seuil prédéterminé.

8. Procédé selon la revendication 6, comprenant en outre l'étape ci-dessous consistant à :
conformément à une détermination selon laquelle une densité d'obstacles dans l'espace tridimensionnel est supérieure à un seuil prédéterminé :
sélectionner, sur la base d'un ou plusieurs paramètres de la plateforme mobile (102), un deuxième sous-ensemble de cellules de grille parmi la pluralité de sous-ensembles de cellules de grille qui sont situés le long d'un itinéraire en cours de la plateforme mobile (102) dans l'espace tridimensionnel ;
dans lequel l'étape de génération de la nouvelle carte de grille (420) comprend l'étape ci-dessous consistant à :
mettre à jour, uniquement au sein du deuxième sous-ensemble de cellules de grille, (1) un ou plusieurs points représentant l'existence d'un ou plusieurs objets à des emplacements correspondants dans l'espace tridimensionnel, et (2) des valeurs représentant un état d'autorisation de lancer de rayons du deuxième sous-ensemble de cellules de grille sur la base des données de capteur, de préférence dans lequel l'étape de mise à jour de l'itinéraire consiste à mettre à jour l'itinéraire pour la plateforme mobile (102) sur la base d'emplacements d'une ou plusieurs cellules de grille dans le second sous-ensemble de cellules de grille qui présentent des valeurs supérieures à un seuil prédéterminé.

9. Procédé selon la revendication 6, comprenant en outre les étapes ci-dessous consistant à :
stocker, dans une première région de mémoire contiguë, des valeurs de cellules de grille le long d'un lancer de rayons allant du sommet vers un point représentant l'existence d'un objet dans l'espace tridimensionnel ; ou
stocker des valeurs de la pluralité de sous-ensembles de cellules de grille dans une pluralité de régions de mémoire contiguës, respectivement,
le procédé comprenant en outre l'étape ci-dessous consistant à :
générer une table de consultation incluant une pluralité d'entrées, une entrée respective identifiant un emplacement d'une cellule de grille respective dans l'espace tridimensionnel, une valeur de la cellule de grille respective, et un emplacement de mémoire pour stocker l'entrée correspondante.

10. Procédé selon la revendication 9, comprenant en outre les étapes ci-dessous consistant à :
recevoir une entrée utilisateur visant à demander à la plateforme mobile (102) de se déplacer vers une première direction ;
sélectionner un troisième sous-ensemble des cellules de grille parmi la pluralité de sous-ensembles de cellules de grille sur la base de la première direction ;
récupérer des entrées correspondant au troisième sous-ensemble de cellules de grille en utilisant la table de consultation ; et
mettre à jour l'itinéraire pour la plateforme mobile (102) sur la base des valeurs du troisième sous-ensemble des cellules de grille.

11. Système destiné à planifier un itinéraire pour une plateforme mobile (102), le système comprenant :
un ou plusieurs processeurs (202) ;
une mémoire (202) ; et
un ou plusieurs programmes, dans lequel ledit un ou lesdits plusieurs programmes sont stockés dans la mémoire (202) et sont configurés de manière à être exécutés par ledit un ou lesdits plusieurs processeurs (202), ledit un ou lesdits plusieurs programmes incluant des instructions pour mettre en oeuvre les opérations du procédé selon l'une quelconque des revendications 1 à 10.

12. Support de stockage non transitoire lisible par ordinateur stockant un ou plusieurs programmes, ledit un ou lesdits plusieurs programmes comprenant des instructions qui, lorsqu'elles sont exécutées par un dispositif électronique, amènent le dispositif électronique à exécuter des instructions pour mettre en œuvre les opérations du procédé selon l'une quelconque des revendications 1 à 10.
